(19) Europäisches Patentamt
European Patent Office
Office européen des brevets

(11) EP 0 912 585 B1

(12) EUROPÄISCHE PATENTSCHRIFT

(45) Veröffentlichungstag und Bekanntmachung des Hinweises auf die Patenterteilung:
**10.04.2002 Patentblatt 2002/15**

(21) Anmeldenummer: **97930483.9**

(22) Anmeldetag: **02.07.1997**

(51) Int Cl.[7]: **C07F 17/00**, C08F 10/02

(86) Internationale Anmeldenummer:
**PCT/EP97/03463**

(87) Internationale Veröffentlichungsnummer:
**WO 98/01455 (15.01.1998 Gazette 1998/02)**

(54) **METALLOCEN-VERBINDUNGEN**
METALLOCENE COMPOUNDS
COMPOSES METALLOCENES

(84) Benannte Vertragsstaaten:
**AT BE CH DE ES FI FR GB IT LI NL**

(30) Priorität: **05.07.1996 DE 19627064**

(43) Veröffentlichungstag der Anmeldung:
**06.05.1999 Patentblatt 1999/18**

(73) Patentinhaber: **BAYER AG**
**51368 Leverkusen (DE)**

(72) Erfinder:
- **OSTOJA STARZEWSKI, Karl-Heinz, Aleksander**
  **D-61118 Bad Vilbel (DE)**
- **KELLY, Warren, Mark**
  **D-51373 Leverkusen (DE)**

(56) Entgegenhaltungen:
**EP-A- 0 638 593** **DE-A- 4 420 456**

EP 0 912 585 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung bezieht sich auf Metallocen-Verbindungen, in denen ein Übergangsmetall mit zwei anionischen Cyclopentadienyl-Liganden (Carbanionen) komplexiert ist und die beiden Carbanionen durch mindestens eine Brucke aus einem Donor und einem Akzeptor miteinander verbunden sind. Die zwischen dem Donoratom und dem Akzeptoratom entstehende koordinative Bindung erzeugt in der Donorgruppe eine positive (Teil)Ladung und in der Akzeptorgruppe eine negative (Teil)Ladung:

$$[\overset{\Delta+}{\text{Donorgruppe}} \rightarrow \overset{\Delta-}{\text{Akzeptorgruppe}}]$$

Die Erfindung bezieht sich weiterhin auf ein Verfahren zur Herstellung solcher neuen Metallocen-Verbindungen und auf deren Verwendung als Polymerisationskatalysatoren.

Metallocene und ihr Einsatz als Katalysatoren bei der Polymerisation von Olefinen sind seit langem bekannt (EP-A 129 368 und die darin zitierte Literatur) Aus EP-A '368 ist weiterhin bekannt, daß Metallocene in Kombination mit Aluminiumalkyl/Wasser als Cokatalysatoren wirksame Systeme für die Polymerisation von Ethylen darstellen (so wird beispielsweise aus 1 mol Trimethylaluminium und 1 mol Wasser Methylaluminoxan = MAO gebildet. Auch andere stochlometrische Verhaltnisse wurden schon mit Erfolg angewandt (WO 94/20506)). Es sind auch bereits Metallocene bekannt, deren Cyclopentadienylgeruste miteinander durch eine Brücke kovalent verknüpft sind. Als Beispiel für die zahlreichen Patente und Anmeldungen auf diesem Gebiet sei EP-A 704 461 erwähnt, worin die darin genannte Verknüpfungsgruppe eine (substituierte) Methylengruppe oder Ethylengruppe, eine Silylengruppe, eine substituierte Silylengruppe, eine substituierte Germylengruppe oder eine substituierte Phosphingruppe darstellt Auch in EP '461 sind die verbrückten Metallocene als Polymerisationskatalysatoren für Olefine vorgesehen Trotz der zahlreichen Patente und Anmeldungen auf diesem Gebiet besteht weiterhin der Wunsch nach verbesserten Katalysatoren, die sich durch hohe Aktivität auszeichnen, so daß die Menge des im Polymer verbleibenden Katalysators gering angesetzt werden kann, und die sich gleichermaßen fur die Polymerisation und Copolymerisation von Olefinen zu Thermoplasten und zu elastomeren Produkten als auch für die Polymerisation und Copolymerisation von Diolefinen, gegebenenfalls mit Olefinen, eignen.

Es wurde nun gefunden, daß sich besonders vorteilhafte Katalysatoren aus verbrückten Metallocen-Verbindungen herstellen lassen, bei denen die Verbruckung der beiden Cyclopentadienyl-haltigen Liganden durch eine, zwei oder drei Donor-Akzeptor-Bindungen hergestellt wird, in denen jeweils zwischen dem Donoratom und dem Akzeptoratom eine koordinative oder sogenannte dative Bindung entsteht, der zumindest formal eine ionische Bindung überlagert ist. Die Reversibilitat der Donor-Akzeptor-Bindung läßt neben dem durch den Pfeil zwischen D und A gekennzeichneten verbrückten Zustand auch den unverbrückten Zustand zu, in welchem die beiden $\pi$-Systeme infolge der ihnen innewohnenden Rotationsenergie sich beispielsweise um 360 Winkelgrade gegeneinander drehen können, ohne daß die Integritat des Metall-Komplexes aufgegeben wird. Nach vollendeter Drehung "schnappt" die Donor-Akzeptor-Bindung wieder ein. Beim Vorliegen mehrerer Donoren und/oder Akzeptoren kann ein solches "Einschnappen" bereits nach Durchlaufen von weniger als 360 Winkelgraden stattfinden Erfindungsgernaße Metallocene lassen sich daher nur durch einen Doppelpfeil und die Formelteile (Ia) und (Ib) zur Umfassung beider Zustände darstellen

Die Erfindung betrifft demnach Metallocen-Verbindungen der Formel

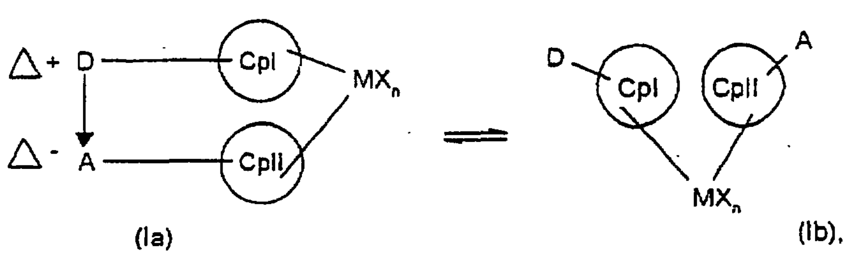

(Ia) (Ib), (I)

in der

CpI und CpII zwei gleiche oder verschiedene.Carbanionen mit einer Cyclopentadienyl-haltigen Struktur darstellen, in denen eines bis alle H-Atome durch gleiche oder verschiedene Reste aus der Gruppe von linearem

oder verzweigtem $C_1$-$C_{20}$-Alkyl, das 1-fach bis vollständig durch Halogen, 1-3fach durch Phenyl sowie 1-3fach durch Vinyl substituiert sein kann, $C_6$-$C_{12}$-Aryl, Halogenaryl mit 6 bis 12 C-Atomen, Organometall-Substituenten, wie Silyl, Trimethylsilyl, Ferrocenyl sowie 1- oder 2-fach durch D und A substituiert sein konnen.

D ein Donoratom bedeutet, das zusätzlich Substituenten tragen kann und das in seinem jeweiligen Bindungszustand mindestens über ein freies Elektronenpaar verfügt,

A ein Akzeptoratom bedeutet, das zusätzlich Substituenten tragen kann und das in seinem jeweiligen Bindungszustand eine Elektronenpaar-Lücke aufweist,

wobei D und A durch eine reversible koordinative Bindung derart verknupft sind, daß die Donorgruppe eine positive (Teil)Ladung und die Akzeptorgruppe eine negative (Teil)Ladung annehmen,

M fur ein Ubergangsmetall der III, IV., V oder VI Nebengruppe des Periodensystems der Elemente (Mendelejew) einschließlich der Lanthaniden und Actiniden steht,

X ein Anionäquivalent bedeutet und

n in Abhängigkeit von der Ladung von M die Zahl Null, Eins, Zwei, Drei oder Vier bedeutet.

Die Erfindung betrifft weiterhin ein Verfahren zur Herstellung von Metallocen-Verbindungen der Formel (I), das dadurch gekennzeichnet ist, daß man entweder je eine Verbindung der Formeln (II) und (III)

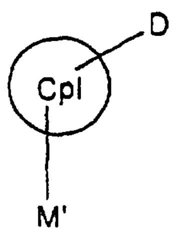 (II), 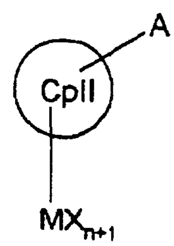 (III)

oder je eine Verbindung der Formeln (IV) und (V)

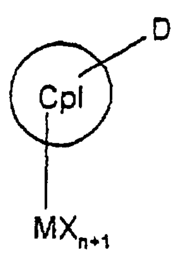 (IV), 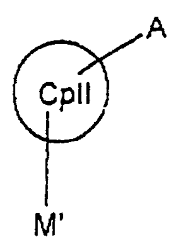 (V),

oder je eine Verbindung der Formeln (VI) und (VII)

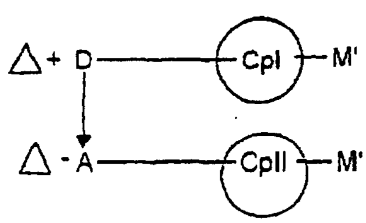 (VI) , $MX_{n+2}$ (VII)

unter Austritt von M'X in Gegenwart eines aprotischen Lösungsmittels oder je eine Verbindung der Formeln (VIII) und (III)

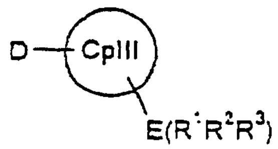 (VIII), 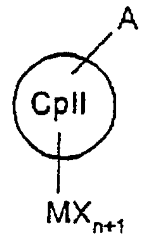 (III)

oder je eine Verbindung der Formeln (IV) und (IX)

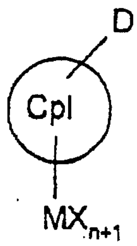 (IV), 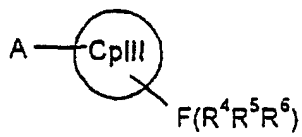 (IX)

oder je eine Verbindung der Formeln (X) und (VII)

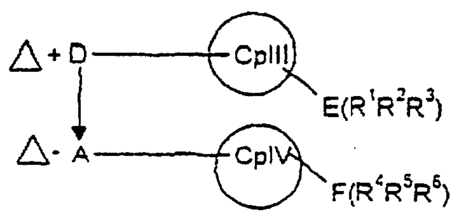 (X), $MX_{n-2}$ (VII)

unter Austritt von $E(R^1R^2R^3)X$ und $F(R^4R^5R^6)X$ in Abwesenheit oder in Gegenwart eines aprotischen Lösungsmittels miteinander umsetzt, wobei

CpI, CpII, D, A, M, X und n die obige Bedeutung haben,

CpIII und CpIV zwei gleiche oder verschiedene ungeladene Molekülteile mit einer Cyclopentadien-haltigen Struktur darstellen, ansonsten aber CpI und CpII gleichen,

M' ein Kationaquivalent eines (Erd)Alkalimetalls oder T1 bedeutet,

E und F unabhangig voneinander eines der Elemente Si, Ge oder Sn bedeuten und

$R^1$, $R^2$, $R^3$, $R^4$, $R^5$ und $R^6$ unabhangig voneinander für geradkettiges oder verzweigtes $C_1$-$C_{20}$-Alkyl, $C_6$-$C_{12}$-Aryl sowie $C_1$-$C_6$-Alkyl-$C_6$-$C_{12}$-Aryl und $C_6$-$C_{12}$-Aryl-$C_1$-$C_6$-Alkyl, Vinyl, Alkyl oder Halogen stehen,

wobei weiterhin in den Formeln (VIII), (IX), (X) anstelle von $E(R^1R^2R^3)$ und $F(R^4R^5R^6)$ Wasserstoff stehen kann und in diesem Falle X auch für ein Amidanion vom Ryp $R_2N^\theta$ oder ein Carbanion vom Typ $R_3C^\theta$ oder ein Alkoholatanion vom Typ $RO^\theta$ stehen kann, und wobei es weiterhin möglich ist, Verbindungen der Formeln (II) oder (VIII) in Gegenwart von Verbindungen der Formeln (V) oder (IX) direkt mit einer Ubergangsmetall-Verbindung der Formel (VII) umzusetzen. Zwei Anionen konnen ferner, gegebenenfalls unter Zwischenschaltung einer ein- oder mehratomigen Brücke, zu einem

Dianion verbunden sein

Bei der Reaktion von (VIII) mit (III) bzw. (IV) mit (IX) bzw. (X) mit (VII) bildet sich bei der zuletzt genannten Variante die Struktur (I) unter Austritt von Amin $R_2NH$ bzw $R_2NE(R^1R^2R^3)$ bzw. $R_2NF(R^4R^5R^6)$ oder einer Kohlenwasserstoffverbindung der Formel $R_3CH$ bzw. $R_3CE(R^1R^2R^3)$ bzw $R_3CF(R^4R^5R^6)$ oder eines Ethers $ROE(R^1R^2R^3)$ bzw. $ROF(R^4R^5R^6)$, worin die organischen Reste R gleich oder verschieden und unabhängig voneinander $C_1$-$C_{20}$-Alkyl, $C_6$-$C_{12}$-Aryl, substituiertes oder unsubstituiertes Allyl, Benzyl oder Wasserstoff sind. Beispiele für austretendes Amin oder Kohlenwasserstoff, Ether, Silan, Stannan oder German sind etwa Dimethylamin, Diethylamin, Di-(n-propyl)-amin, Di-(isopropyl)-amin, Di-(tertiärbutyl)-amin. Tertiärbutylamin, Cyclohexylamin, Anilin. Methyl-phenylamin, Di-(allyl)-amin bzw. Methan, Toluol, Trimethylsilylamin, Trimethylsilylether, Tetramethylsilan und ähnliches.

Es ist auch möglich, Verbindungen der Formeln (II) oder (VIII) in Gegenwart von Verbindungen der Formeln (V) oder (IX) direkt mit einer ÜbergangsmetallVerbindung der Formel (VII) umzusetzen.

Die Erfindung betrifft weiterhin die Verwendung der beschriebenen Metallocen-Verbindungen in einem Verfahren zur Horno- oder Copolymerisation eines oder mehrerer Olefine, i-Olefine, Alkine oder Diolefine als Monomere oder zur ringöffnenden Polyaddition in der Gas-, Losungs-, Hochdruck- oder Slurry-Phase bei -60 bis +250°C, bevorzugt bis +200°C und 0,5 bis 5000 bar, bevorzugt 1 bis 3000 bar und in Gegenwart oder Abwesenheit von gesättigten oder aromatischen Kohlenwasserstoffen oder von gesättigten oder aromatischen Halogenkohlenwasserstoffen und in Gegenwart oder Abwesenheit von Wasserstoff, wobei diese Metallocen-Verbindungen als Katalysatoren in einer Menge von $10^1$ bis $10^{12}$ mol aller Monomerer pro mol Metallocen eingesetzt werden und wobei weiterhin in Gegenwart von Lewis-Sauren, Brönstedt-Säuren oder Pearson-Sauren oder zusätzlich in Gegenwart von Lewis-Basen gearbeitet werden kann

Solche Lewis-Säuren sind beispielsweise Borane oder Alane, wie Aluminiumalkyle, Aluminiumhalogenide, Aluminiumalkoholate, Bororganyle, Borhalogenide. Borsaureester oder Bor- bzw. Aluminium-Verbindungen, die sowohl Halogenidals auch Alkyl- bzw. Aryl- oder Alkoholat-Substituenten enthalten, sowie Mischungen davon oder das Triphenylmethyl-Kation. Besonders bevorzugt sind Aluminoxane oder Mischungen von Aluminium-haltigen Lewis-Säuren mit Wasser. Alle Säuren wirken nach heutigen Erkenntnissen als ionisierende Agentien, die ein Metalloceniumkation ausbilden, das durch ein sperriges, schlecht koordinierendes Anion ladungskompensiert wird.

Die Erfindung betrifft weiterhin die Reaktionsprodukte solcher ionisierender Agentien mit Metallocen-Verbindungen der Formel (I). Sie lassen sich durch die Formeln (XIa) bzw (XIb) beschreiben

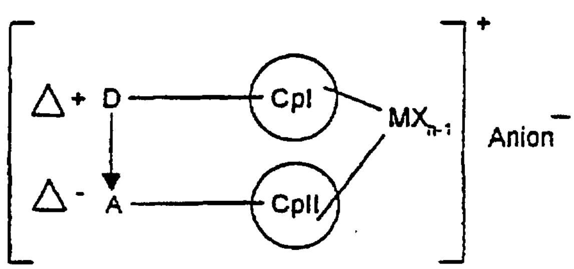

(XIa),

bzw.

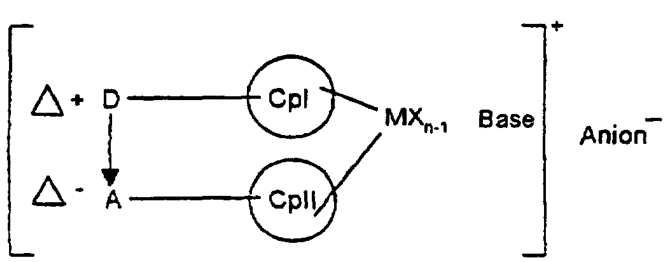

(XIb),

in denen

Anion fur das gesamte sperrige, schlecht koordinierende Anion und Base für eine Lewis-Base stehen

Die erfindungsgemaßen Metallocen-Verbindungen der Formel (I) bzw. (XI) konnen sowohl in monomerer, dimerer als auch in oligomerer Form vorliegen.

Beispiele für solche schlecht koordinierenden Anionen sind z B.

$B(C_6H_5)_4^{\ominus}$, $B(C_6F_5)_4^{\ominus}$, $B(CH_3)(C_6F_5)_3^{\ominus}$,

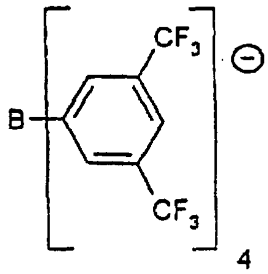

oder Sulfonate, wie Tosylat oder Triflat, Tetrafluorborate, Hexafluorphosphate oder -antimonate, Perchlorate, sowie voluminöse Cluster-Molekülanionen vom Typ der Carborane, beispielsweise $C_2B_9H_{12}^{\ominus}$ oder $CB_{11}H_{12}^{\ominus}$ Beim Vorliegen solcher Anionen können Metallocen-Verbindungen auch bei Abwesenheit von Aluminoxan als hochwirksame Polymerisationskatalystoren wirken. Das ist vor allem dann der Fall, wenn ein X-Ligand eine Alkylgruppe oder Benzyl darstellt. Es kann aber auch vorteilhaft sein, solche Metallocen-Komplexe mit voluminösen Anionen in Kombination mit Aluminiumalkylen, wie $(CH_3)_3Al$, $C_2H_5)_3Al$, (n-/i-Propyl)$_3$Al, (n-/t-Butyl)$_3$Al, (i-Butyl)$_3$Al, die isomeren Pentyl-, Hexyl- oder Octyl-Aluminiumalkyle, oder Lithiumalkylen, wie Methyl-Li, Benzyl-Li, Butyl-Li oder den entsprechenden Mg-organischen Verbindungen, wie Grignard-Verbindungen oder Zn-Organylen, einzusetzen. Solche Metallalkyle übertragen einerseits Alkylgruppen auf das Zentralmetall, andererseits fangen sie Wasser oder Katalysatorgifte aus dem Reaktionsmedium bzw. Monomer bei Polymerisationsreaktionen ab Beispiel fur Borverbindungen, von denen solche Anionen abgeleitet werden können, sind:

Triethylammonium-tetraphenylborat,
Tripropylammonium-tetraphenylborat,
Tri(n-butyl)ammonium-tetraphenyborat,
Tri(t-butyl)ammonium-tetraphenylborat,
N,N-Dimethylanilinium-tetraphenylborat,
N,N-Diethylanilinium-tetraphenylborat,
N,N-Dimethyl(2,4,6-trimethylanilinium)tetraphenylborat,
Trimethylammonium-tetrakis(pentafluorophenyl)borat, Triethylammonium-tetrakis-(pentafluorophenyl)borat,
Tripropylammonium-tetrakis(pentafluorophenyl)borat,
Tri(n-butyl)ammonium-tetrakis(pentafluorophenyl)borat, Tri(sec-butyi)ammoniumtetrakis(pentafluorophenyl)borat,
N,N-Dimethylanilinium-tetrakis(pentafluorophenyl)borat,
N,N-Diethylanilinium-tetrakis(pentaflurophenyl)borat, N,N-dimethyl(2,4,5-trimethylanilinium)-tetrakis(pentafluorophenyl)borat,
Trimethylamminium-tetrakis(2,3,4,6-tetrafluorophenyl)borat,
Triethylammonium-tetrakis (2,3,46-tetrafluorophenyl)borat,
Tripropylmmonium-tetrakis(2,3,4,6-tetrafluorophenyl)borat,
Tri(n-butyl)ammonium-tetrakis(2,3,4,6-tetrafluorophenyl)borat,
Dimethyl(t-butyl)ammonium-tetrakis(2,3,4,6-tetrafluorophenyl)borat,
N,N-Dimethylanilinium-tetrakis(2,3,4,6-tetrafluorophenyl)borat,
N,NDiethyl anilinium-tetrakis(2,3,4,6-tetrafluorophenyl)borat,
N,N-Dimethyl-(2,4,6-trimethylanilinium)-tetrakis-(2,3,4,6-tetrafluorophenyl)borat;
Dialkylammonium-Salze, wie:
Di-(i-propyl)ammonium-tetrakis(pentafluorophenyl)borat und
Dicyclohexylammonium-tetrakis(pentafluorophenyl)borat;
Tri-substituierte Phosphonium-Salze, wie:
Triphenylphosphonium-tetrakis(pentafluorophenyl)borat,
Tri(o-tolyl)phosphonium-tetrakis(pentrafluorophenyl)borat,
Tri(2,6-dimethylphenyl)phosphonium-tetrakis(pentafluorophenyl)borat,
Triolylmethyl-tetrakis(pentafluorphenyl)borat,
Triphenylmethyl-tetraphenylborat (Trityl-tetraphenylborat),

Trityl-tetrakis(pentrafluorpheyl)borat,
Silber-tetrafluorborat,
Tris(pentafluorphenyl)boran,
Tris(trifluormethyl)boran.

Die erfindungsgemäßen Metallocen-Verbindungen können isoliert als Reinstoffe zur (Co)Polymerisation eingesetzt werden. Es ist aber auch moglich, sie "in situ" im (Co)Polymerisationsreaktor in einer dem Fachmann bekannten Weise zu erzeugen und zu verwenden.

Das erste und das zweite Carbanion CpI und CpII mit einem Cyclopentadienylgerüst können gleich oder verschieden sein. Das Cyclopentadienylgerust kann beispielsweise eines aus der Gruppe von Cyclopentadien, substituiertem Cyclopemadien, Inden, substituiertem Inden, Fluoren und substituiertem Fluoren sein Als Substituenten seien 1 bis 4 je Cyclopentadien- bzw. ankondensiertem Benzolring genannt. Diese Substituenten können $C_1$-$C_{20}$-Alkyl, wie Methyl, Ethyl, Propyl. Isopropyl, Butyl oder iso-Butyl, Hexyl, Octyl, Decyl, Dodecyl, Hexadecyl, Octadecyl, Eicosyl, $C_1$-$C_{20}$-Alkoxy, wie Methoxy, Ethoxy, Propoxy, Isopropoxy, Butoxy oder iso-Butoxy, Hexoxy, Octyloxy, Decyloxy, Dodecyloxy, Hexadecyloxy, Octadecyloxy, Eicosyloxy, Halogen, wie Fluor, Chlor oder Brom, $C_6$-$C_{12}$-Aryl, wie Phenyl, $C_1$-$C_4$-Alkylphenyl, wie Tolyl. Ethylphenyl, (i-)Propylphenyl, (i-,tert.-)Butylphenyl, Xylyl, Halogenphenyl, wie Fluor-, Chlor-, Bromphenyl, Naphthyl oder Biphenylyl, Triorganyl-silyl, wie Trimethylsilyl (TMS), Ferrocenyl sowie D bzw. A, wie oben definiert, sein. Ankondensierte aromatische Ringe können ferner teilweise oder vollständig hydriert sein, so daß lediglich die Doppelbindung bestehen bleibt, an der sowohl der ankondensierte Ring als auch der Cyclopentadienring Anteil haben Weiterhin können Benzolringe, wie im Inden oder Fluoren, einen oder zwei ankondensierte weitere Benzolringe enthalten Noch weiterhin können der Cyclopentadien- bzw. Cyclopentadienylring und ein ankondensierter Benzolring gemeinsam einen weiteren Benzolring ankondensiert enthalten. Solche Cyclopentadiengerüste sind in Form ihrer Anionen ausgezeichnete Liganden für Übergangsmetalle, wobei jedes Cyclopentadienyl-Carbanion der genannten, gegebenenfalls substituierten Form eine positive Ladung des Zentralmetalls im Komplex kompensiert. Einzelbeispiele für solche Carbanionen sind: Cyclopentadienyl, Methyl-cyclopentadienyl, 1,2-Dimethyl-cyclopentadienyl, 1,3-Dimethyl-cyclopentadienyl, Indenyl, Phenylindenyl, 1,2-Diethyl-cyclopentadienyl, Tetramethyl-cyclopentadienyl, Ethyl-cyclopentadienyl, n-Butyl-cyclopentadienyl, n-Octyl-cyclopentadienyl, β-Phenylpropylcyclopentadienyl, Tetrahydroindenyl, Propyl-cyclopentadienyl, t-Butylcyclopentadienyl, Benzyl-cyclopentadienyl, Diphenylmethyl-cyclopentadienyl, Trimethylgermyl-cyclopentadienyl, Trimethylstannyl-cyclopentadienyl, Trifluormethyl-cyclopentadienyl, Trimethylsilyl-cyclopentadienyl. Pentamethylcyclopentadienyl, Fluorenyl, Tetrahydro- bzw. Octahydro-fluorenyl, am Sechsring benzoanellierte Fluorenyle und Indenyle, N,N-Dimethylamino-cyclopentadienyl, Dimethylphosphino-cyclopentadienyl, Methoxy-cyclopentadienyl, Dimethylboranylcyclopentadienyl, (N,N-Dimethylaminomethyl)-cyclopentadienyl.

Neben der obligatorisch vorhandenen ersten Donor-Akzeptor-Bindung zwischen D und A können weitere Donor-Akzeptor-Bindungen gebildet werden, wenn zusätzliche D und/oder A als Substituenten der jeweiligen Cyclopentadiensysteme vorliegen. Alle Donor-Akzeptor-Bindungen sind durch ihre oben dargestellte Reversibilität gekennzeichnet. Für den Fall mehrerer D bzw. A konnen diese verschiedene der genannten Positionen einnehmen. Die Erfindung umfaßt demnach sowohl die verbrückten Molekül-Zustände (Ia) als auch die unverbruckten Zustände (Ib). Die Anzahl der D-Gruppen kann gleich oder verschieden zur Anzahl der A-Gruppen sein. In bevorzugter Weise werden CpI und CpII über nur eine Donor-Akzeptor-Brücke verknüpft

Neben den erfindungsgemaßen D/A-Brücken können auch kovalente Brücken vorliegen. In diesem Falle verstärken die D/A-Brücken die Stereorigidität und die Thermostabilität des Katalysators. Beim Wechsel zwischen geschlossener und geöffneter D/A-Bindung werden Sequenzpolymere mit höherer und niedrigerer Stereoregularität zugänglich. Solche Sequenzen können bei Copolymeren unterschiedliche chemische Zusammensetzungen haben.

Als Donorgruppen kommen vor allem solche in Frage, bei denen das Donoratom D ein Element der 5., 6 oder 7, Hauptgruppe des Periodensystems der Elemente (Mendelejew) ist und mindestens ein freies Elektronenpaar besitzt und wobei sich das Donoratom im Falle von Elementen der 5. Hauptgruppe in einem Bindungszustand mit Substituenten befindet und im Falle von Elementen der 6 Hauptgruppe in einem solchen befinden kann; Donoratome der 7. Hauptgruppe tragen keine Substituenten. Dies wird am Beispiel von Phosphor P, Sauerstoff O und Chlor Cl als Donoratome wie folgt verdeutlicht, wobei "Subst." solche genannten Substituenten und "-Cp" die Bindung an das Cyclopentadienyl-haltige Carbanion darstellen, ein Strich mit einem Pfeil, die in Formel (I) angegebene Bedeutung einer koordinativen Bindung hat und sonstige Striche vorhandene Elektronenpaare bedeuten:

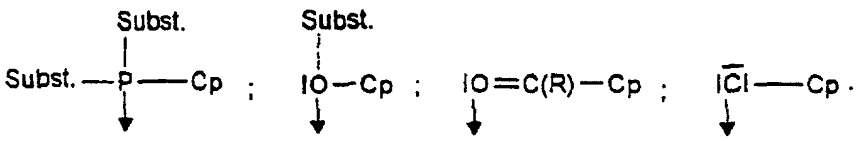

Als Akzeptorgruppen kommen vor allem solche in Frage, deren Akzeptoratom A ein Element aus der 3. Hauptgruppe des Periodensystems der Elemente (Mendelejew), wie Bor, Aluminium, Gallium, Indium und Thallium ist, sich in einem Bindungszustand mit Substituenten befindet und eine Elektronenlucke besitzt

D und A sind durch eine koordinative Bindung, die auch als dative Bindung bezeichnet wird, verknupft, wobei D eine positive (Teil)Ladung und A eine negative (Teil)Ladung annehmen.

Es wird demnach zwischen dem Donoratom D und der Donorgruppe bzw. zwischen dem Akzeptoratom A und der Akzeptorgruppe unterschieden. Die koordinative Bindung D → A wird zwischen dem Donoratom D und dem Akzeptoratom A hergestellt. Die Donorgruppe bedeutet die Einheit aus dem Donoratom D, den gegebenenfalls vorhandenen Substituenten und den vorhandenen Elektronenpaaren; entsprechend bedeutet die Akzeptorgruppe die Einheit aus dem Akzeptoratom A, den Substituenten und der vorhandenen Elektronenlücke.

Die Bindung zwischen dem Donoratom bzw. dem Akzeptoratom und dem Cyclopentadienyl-haltigen Carbanion kann durch Spacergruppen im Sinne von D-Spacer-Cp bzw. A-Spacer-Cp unterbrochen sein. Im dritten der obigen Formelbeispiele stellt =C(R)- einen solchen Spacer zwischen O und Cp dar. Spacergruppen sind beispielsweise:

Dimethylsilyl,
Diethylsilyl,
Di-n-propylsilyl,
Diisopropylsilyl,
Di-n-butylsilyl,
Di-t-butylsilyl,
Di-n-hexylsilyl,
Methylphenylsilyl,
Ethylmethylsilyl,
Diphenylsilyl,
Di (p-t-butylphenethylsilyl),
n-Hexylmethylsilyl,
Cyclopentamethylensilyl,
Cyclotetramethytensilyl,
Cyclotrimethylensilyl,
Dimethylgermanyl,
Diethylgermanyl,
Phenylamino,
t-Butylamino,
Methylamino,
t-Butylphosphino,
Ethylphosphino,
Phenylphosphino,
Methylen,
Dimethylmethylen (i-Propyliden),
Diethylmethylen,
Ethylen,
Dimethylethylen,
Diethylethylen,
Dipropylethylen,
Propylen,
Dimethylpropylen,
Diethylpropylen,
1,1-Dimethyl-3,3-dimethylpropylen,
Tetramethyldisiloxan,
1,1,4,4-Tetramethyldisilylethylen,

Diphenylmethylen.

In bevorzugter Weise sind D bzw. A ohne Spacer an das Cyclopentadienyl-haltige Carbanion gebunden.

D bzw. A können unabhängig voneinander am Cyclopentadien(yl)ring oder einem ankondensiserten Benzolring oder einem anderen Substituenten von CpI bzw. CpII sitzen. Für den Fall mehrerer D bzw. A können diese verschiedene der genannten Positionen einnehmen.

Substituenten an den Donoratomen N, P, As, Sb, Bi, O, S, Se bzw. Te und an den Akzeptoratomen B, Al, Ga, In bzw. T1 sind beispielsweise: $C_1$-$C_{12}$(Cyclo)Alkyl, wie Methyl, Ethyl, Propyl, i-Propyl, Cyclopropyl, Butyl, i-Butyl, tert. -Butyl, Cyclobutyl, Pentyl, Neopentyl, Cyclopentyl, Hexyl, Cyclohexyl, die isomeren Heptyle, Octyle, Nonyle, Decyle, Undecyle, Dodecyle; die hierzu korrespondierenden $C_1$-$C_{12}$-Alkoxy-Gruppen; Vinyl, Butenyl, Allyl; $C_6$-$C_{12}$-Aryl, wie Phenyl, Naphthyl oder Biphenylyl, Benzyl, die durch Halogen, 1 oder 2 $C_1$-$C_4$-Alkylgruppen, $C_1$-$C_4$-Alkoxygruppen, Sulfonat, Nitro oder Halogenalkylgruppen, $C_1$-$C_6$-Alkyl-carboxy, $C_1$-$C_6$-Alkyl-carbonyl oder Cyano substituiert sein können (z.B. Perfluorphenyl, m,m'-Bis(trifluormethyl)-phenyl, Tri($C_1$-$C_{20}$-alkyl)silyl, Tri($C_6$-$C_{12}$-aryl)silyl und analoge, dem Fachmann geläufige Substituenten); analoge Aryloxygruppen; Indenyl; Halogen, wie F, Cl, Br und I, 1-Thienyl, disubstituiertes Amino, wie ($C_1$-$C_{12}$-Alkyl)$_2$amino, Diphenylamino, Tris-($C_1$-$C_{12}$ - alkyl)-silyl, $NaSO_3$-Aryl, wie $NaSO_3$-Phenyl und $NaSO_3$-Tolyl, $C_6H_5$-C≡C-; aliphatisches und aromatisches $C_1$-$C_{20}$-Silyl, dessen Alkylsubstituenten neben den oben genannten zusätzlich Octyl, Decyl, Dodecyl, Stearyl oder Eicosyl sein können und dessen Arylsubstituenten Phenyl, Tolyl, Xylyl, Naphthyl oder Biphenylyl sein können; und solche substituierten Silylgruppen, die über $-CH_2$- an das Donoratom bzw. das Akzeptoratom gebunden sind, beispielsweise $(CH_3)_3SiCH_2$-, ($C_1$-$C_{12}$-Alkyl)(phenyl)amino, ($C_1$-$C_{12}$-Alkyl-naphthyl)-amino, ($C_1$-$C_{12}$-Alkylphenyl)$_2$amino, $C_6$-$C_{12}$-Aryloxy mit den oben genannten Arylgruppen, $C_1$-$C_8$-Perfluoralkyl, Perfluorphenyl. Bevorzugte Substituenten sind: $C_1$-$C_6$-Alkyl, $C_5$-$C_6$-Cycloalkyl, Phenyl, Tolyl, $C_1$-$C_6$-Alkoxy, $C_6$-$C_{12}$-Aryloxy, Vinyl, Allyl, Benzyl, Perfluorphenyl, F, Cl, Br, Di-($C_1$-$C_6$-alkyl)-amino, Diphenylamino

Donorgruppen sind solche, bei denen das freie Elektronenpaar am N, P, As, Sb. Bi, O, S, Se, Te, F, Cl, Br, I lokalisiert ist; bevorzugt hiervon sind N, P, O, S. Beispielhaft als Donorgruppen seien genannt: $(CH_3)_2N$-, $(C_2H_5)_2N$-. $(C_3H_7)_2N$-, $(C_4H_9)_2N$-, $(C_6H_5)_2N$-, $(CH_3)_2P$-, $(C_2H_5)_2P$-, $(C_3H_7)_2P$-, (i-$C_3H_7$)$_2$P-, $(C_4H_9)_2P$-, (t-$C_4H_9$)P-, (Cyclohexyl)$_2$P-, $(C_6H_5)_2P$-, $(CH_3)(C_6H_5)P$-, $(CH_3O)_2P$-, $(C_2H_5O)_2P$-, $(C_6H_5O)_2P$-, $(CH_3$-$C_6H_4O)_2P$-, $((CH_3)_2N)_2P$-, Methyl enthaltende Phosphinogruppen $CH_3O$-, $CH_3S$-, $C_6H_5S$-, -C($C_6H_5$)=O, -C($CH_3$)=O, -OSi$(CH_3)_3$, -OSi$(CH_3)_2$-t-butyl, in denen N und P je ein freies Elektronpaar und O und S je zwei freie Elektronenpaare tragen und wobei in den beiden zuletzt genannten Beispielen der doppelt gebundene Sauerstoff über eine Spacergruppe gebunden ist, sowie Systeme, wie der Pyrrolidonring, wobei die von N verschiedenen Ringglieder ebenfalls als Spacer wirken.

Akzeptorgruppen sind solche, bei denen eine Elektronenpaar-Lücke am B, Al, Ga, In oder T1, bevorzugt B, Al oder Ga vorhanden ist; beispielhaft seien genannt: $(CH_3)_2B$-, $(C_2H_5)_2B$-, $H_2B$-, $(C_6H_5)_2B$-, $(CH_3)(C_6H_5)B$-, (Vinyl)$_2$B-, (Benzyl)$_2$B-, $Cl_2B$-, $(CH_3O)_2B$-, $Cl_2Al$-, $(CH_3)_2Al$-, (i-$C_4H_9$)$_2$Al-, (Cl)($C_2H_5$)Al-, $(CH_3)_2Ga$-, $(C_3H_7)_2Ga$-, $((CH_3)_3Si$-$CH_2)_2Ga$-, (Vinyl)$_2$Ga-, $(C_6H_5)_2Ga$-, $(CH_3)_2In$-, $((CH_3)_3Si$-$CH_2)_2In$-, (Cyclopentadienyl)$_2$In-.

Weiterhin kommen solche Donor- und Akzeptorgruppen in Frage, die chirale Zentren enthalten oder in denen 2 Substituenten mit dem D- bzw A-Atom einen Ring bilden. Beispiele hierfür sind etwa

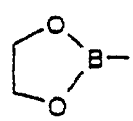 oder 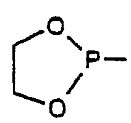

Bevorzugte Donor-Akzeptor-Brucken zwischen CpI und CpII sind beispielsweise folgende:

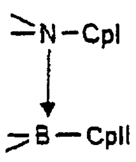 ; 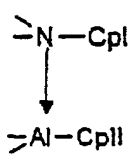 ; 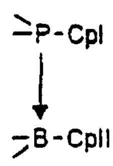 ; 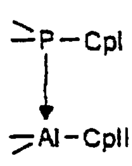 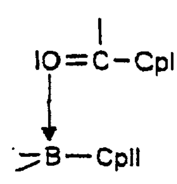 ;

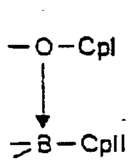 ; 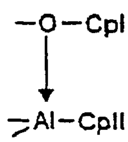 ; 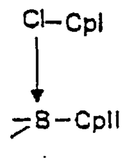 ; 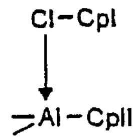 ; 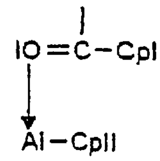

M steht für ein Übergangsmetall aus der 3., 4., 5. oder 6 Nebengruppe des Periodensystems der Elemente (Mendelejew), einschließlich der Lanthaniden und Actiniden; beispielhaft seien genannt: Sc, Y, La, Sm, Nd, Lu, Ti, Zr, Hf, Th, V Nb, Ta, Cr. Bevorzugt sind Ti, Zr, Hf, V, Nb und Ta.

Bei der Ausbildung der Metallocen-Struktur gemäß obiger Formel (I) wird je eine positive Ladung des Übergangsmetalls M durch je ein Cyclopentadienyl-haltiges Carbanion kompensiert. Noch verbleibende positive Ladungen am Zentralatom M werden durch weitere, zumeist einwertige Anionen X abgesättigt, von denen zwei gleiche oder verschiedene auch miteinander verknüpft sein können (Dianionen 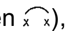), beispielsweise einwertig oder zweiwertig negative Reste aus gleichen oder verschiedenen, linearen oder verzweigten, gesättigten oder ungesattigten Kohlenwasserstoffen, Aminen, Phosphinen, Thioalkoholen, Alkoholen oder Phenolen. Einfache Anionen wie $CR_3^-$, $NR_2^-$, $PR_2^-$, $OR^-$, $SR^-$ usw. können durch gesättigte oder ungesättigte Kohlenwasserstoff- oder Silan-Brücken verbunden sein, wobei Dianionen entstehen und die Anzahl der Brückenatome 0, 1, 2, 3, 4, 5, 6 betragen kann, bevorzugt sind 0 bis 4 Brückenatome, besonders bevorzugt 1 oder 2 Brückenatome. Die Brückenatome können außer H-Atomen noch weitere KW-Substituenten R tragen. Beispiele für Brücken zwischen den einfachen Anionen sind etwa $-CH_2-$, $-CH_2-CH_2-$, $-(CH_2)_3-$, CH=CH, $-(CH=CH)_2-$, $-CH=CH-CH_2-$, $CH_2-CH=CH-CH_2-$, $-Si(CH_3)_2-$, $C(CH_3)_2-$. Beispiele für X sind: Hydrid. Chlorid, Methyl, Ethyl, Phenyl, Fluorid, Bromid, Iodid, der n-Propylrest, der i-Propylrest, der n-Butylrest, der Amylrest, der i-Amylrest, der Hexylrest, der i-Butylrest, der Heptylrest, der Octylrest, der Nonylrest, der Decylrest, der Cetylrest, Methoxy, Ethoxy, Propoxy, Butoxy, Phenoxy, Dimethylamino, Diethylamino, Methylethylamino, Di-t-Butylamino, Diphenylamino, Diphenylphosphino, Dicyclohexylphosphino, Dimethylphosphino, Methyliden, Ethyliden, Propyliden, das Ethylenglykoldianion. Beispiele für Dianionen sind 1,4-Diphenyl-1,3-butadiendiyl, 3-Methyl-1,3-pentadiendiyl, 1,4-Dibenzyl-1,3-butadiendiyl, 2,4-Hexadiendiyl, 1,3-Pentadiendiyl, 1,4-Ditolyl-1,3-butandiendiyl, 1,4-Bis (trimethylsilyl-1,3-butadiendiyl, 1,3-Butadiendiyl. Besonders bevorzugt sind 1,4-Diphenyl-1,3-butandiendiyl, 1,3-Pentadiendiyl, 1,4-Dibenzyl-1,3-butadiendiyl, 2,4-Hexandiendiyl, 3-Methyl-1,3-pentadiendiyl, 1,4-Ditolyl-1-3-butadiendiyl und 1,4-Bis(trimethylsilyl)-1,3-butadiendiyl. Weitere Beispiele für Dianionen sind solche mit Heteroatomen, etwa der Struktur

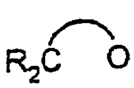 , 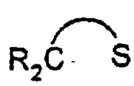 , 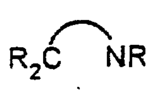 bzw. 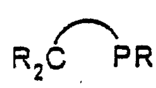 ,

wobei die Brücke die angegebene Bedeutung hat. Besonders bevorzugt sind darüberhinaus zur Ladungskompensation schwach oder nicht koordinierende Anionen der oben genannten Art.

Die Aktivierung durch solche voluminösen Anionen gelingt beispielsweise durch Umsetzung der D/A-Metallocene mit Tris-(pentafluorphenyl)-boran, Triphenylboran, Triphenylaluminium, Trityl-tetrakis-(pentafluorphenyl)-borat oder N,N-Dialkyl-phenyl-ammonium-tecrakis-(pentafluorphenyl)-borat oder den entsprechenden Phosphonium- oder Sulfoniumsalzen von Boraten oder (Erd)Alkali-. Thalliumoder Silbersalzen von Boraten, Carboranen, Tosylaten, Triflaten, Perfluorcarboxylaten, wie Trifluoracetat oder den korrespondierenden Säuren. Vorzugsweise werden dabei D/A-Metallocene eingesetzt, deren Anionäquivalente X = Alkyl-, Aryl- oder Benzylgruppen darstellt. Solche Derivate können auch "in situ" hergestellt werden, indem man D/A-Metallocene mit anderen Anionäquivalenten, wie X = F, Cl, Br, OR, $NR_2$ etc. zuvor mit Aluminiumalkylen, Lithiumorganylen oder Grignard-Verbindungen oder Zink- oder Bleialkylen umsetzt. Die daraus erhaltlichen Umsetzungsprodukte können ohne vorherige Isolierung mit obengenannten Boranen oder Boraten aktiviert werden.

Der Index n nimmt in Abhängigkeit von der Ladung von M den Wert Null, Eins, Zwei. Drei oder Vier, bevorzugt Null, Eins oder Zwei an. Die oben genannten Nebengruppenmetalle können nämlich, unter anderem abhängig von ihrer Zugehörigkeit zu den Nebengruppen, Wertigkeiten/Ladungen von Zwei bis Sechs, bevorzugt Zwei bis Vier annehmen, von denen durch die Carbanionen der Metallocen-Verbindung jeweils zwei kompensiert werden Im Falle von $La^{3+}$ nimmt demnach der Index n den Wert Eins und im Falle von $Zr^{4+}$ den Wert Zwei an; bei $Sm^{2+}$ wird n = Null.

Im Verfahren zur Herstellung der Metallocen-Verbindungen der Formel (I) kann man entweder je eine Verbindung der obigen Formeln (II) und (III) oder je eine Verbindung der obigen Formeln (IV) und (V) oder je eine Verbindung der obigen Formeln (VI) und (VII) oder je eine Verbindung der obigen Formeln (VIII) und (III) oder je eine Verbindung der obigen Formeln (IV) und (IX) oder je eine Verbindung der obigen Formeln (X) und (VII) unter Austritt bzw. Abspaltung von Alkalimetall-X-, Erdalkalimetall-$X_2$-, Silyl-X-, Germyl-X-, Stannyl-X- oder HX-Verbindungen in einem aprotischen Lösungsmittel bei Temperaturen von -78°C bis +120°C, vorzugsweise von -40°C bis +70°C und in einem Molverhältnis von (II):(III) bzw. (IV):(V) bzw. (VI):(VII) bzw. (VIII):(III) bzw. (IV):(IX) bzw. (X):(VII) von 1:0,5-2, vorzugsweise 1:0,8-1,2, besonders bevorzugt 1:1, miteinander umzusetzen. In den Fällen der Umsetzung von (VIII) mit (III) bzw (IV) mit (IX) bzw. (X) mit (VII) ist es möglich, auf ein aprotisches Lösungsmittel zu verzichten, wenn (VIII), (IX) oder (X) unter Reaktionsbedingungen flüssig ist. Beispiele für solche austretenden bzw. abgespaltenen Verbindungen sind: TlCl, LiCl, LiBr, LiF, LiI, NaCl, NaBr, KCl, KF, $MgCl_2$ $MgBr_2$, $CaCl_2$, $CaF_2$, Trimethylchlorsilan, Triethylchlorsilan, Tri-(n-butyl)-chlorsilan, Triphenylchlorsilan, Trimethylchlorgerman, Trimethylchlorstannan, Dimethylamin, Diethylamin, Dibutylamin und weitere Verbindungen, die aus dem oben genannten Substitutionsmuster für den Fachmann erkennbar sind.

Verbindungen der Formel (II) bzw. (IV) stellen somit Carbanionen mit einem Cyclopentadienylgerüst dar, die zur D/A-Brückenbindung genutzte 1 bis 3 Donorgruppen kovalent gebunden enthalten und als Gegenion zur negativen Ladung des Cyclopentadienylgerüstes ein Kation aufweisen. Verbindungen der Formel (VIII) sind ungeladene Cyclopentadien-Gerüste mit ebenfalls zur D/A-Brückenbindung genutzte 1 bis 3 Donorgruppen, aber mit leicht abspaltbaren Abgangsgruppen $E(R^1R^2R^3)$, wie Silyl-, Germyl- oder Stannylgruppen oder Wasserstoff, an Stelle der ionischen Gruppen.

Die zweite Komponente zur Ausbildung der erfindungsgemäßen Metallocen-Verbindungen, nämlich die Verbindung der Formel (III) bzw. (V) stellt ebenfalls ein Carbanion mit einem Cyclopentadienylgerüst dar, das gleich dem Cyclopentadienylgerüst der Verbindung (II) bzw. (IV) oder verschieden von ihm ist, jedoch 1 bis 3 zur D/A-Brückenbindung genutzte Akzeptorgruppen an Stelle der Donorgruppen trägt. In entsprechender Weise sind Verbindungen der Formel (IX) ungeladene Cyclopentadien-Gerüste mit 1 bis 3 zur D/A-Brückenbindung genutzte Akzeptorgruppen und ebenfalls leicht abspaltbaren Abgangsgruppen $F(R^4R^5R^6)$.

In völlig analoger Weise stellen Verbindungen der Formeln (VI) bzw. (X) Ausgangstoffe mit vorgebildeter D $\rightarrow$ A-Bindung dar, die Carbanionen-Gegenkationen-Verbindungen bzw. ungeladene Cyclopentadien-Gerüste mit insgesamt möglichen 1 bis 3 D $\rightarrow$ A-Bindungen bedeuten und durch Reaktion mit Verbindungen der Formel (VII) die Metallocen-Verbindungen (I) ergeben.

Beide Ausgangsstoffe des erfindungsgemäßen Verfahrens, nämlich (II) und (III) bzw. (IV) und (V) bzw. (VI) und (VII) bzw. (VIII) und (III) bzw. (IV) und (IX) bzw. (X) und (VII) reagieren beim Zusammengeben spontan unter gleichzeitiger Ausbildung der Donor-Akzeptor-Gruppe -D $\rightarrow$ A- bzw. der Komplexierung des Metallkations M unter Austritt von M'X bzw. $E(R^1R^2R^3)X$ bzw. $F(R^4R^5R^6)X$ bzw. HX. Bei der Darstellung der Donor-Akzeptor-Gruppe wurden die Substituenten an D und A der Übersichtlichkeit halber weggelassen.

M' ist ein Kationäquivalent eines (Erd)Alkalimetalls, wie Li, Na, K, ½ Mg, ½ Ca, ½ Sr, ½ Ba, oder Thallium.

Lösungsmittel für das erfindungsgemäße Verfahren sind aprotische, polare oder unpolare Lösungsmittel, wie aliphatische und aromatische Kohlenwasserstoffe oder aliphatische und aromatische Halogenkohlenwasserstoffe. Im Prinzip kommen auch weitere aprotische Lösungsmittel, wie sie dem Fachmann bekannt sind, in Frage, jedoch sind wegen der einfacheren Aufarbeitung solche mit zu hohen Siedepunkten weniger bevorzugt. Typische Beispiele sind: n-Hexan, Cyclohexan, Penian, Heptan, Petrolether, Toluol, Benzol, Chlorbenzol, Methylenchlorid, Diethylether, Tetrahydrofuran, Ethylenglykol-dimethylether.

Die Ausgangsstoffe der Formeln (II), (III), (IV) und (V) für das erfindungsgemäße Verfahren können gemäß literaturbekannten Verfahren oder analog zu diesen hergestellt werden. So läßt sich beispielsweise analog zu J. of Organometallic Chem. (1971), 29, 227, das marktgängige Trimethylsilyl-cyclopentadien zunächst mit Butyl-lithium und dann mit Trimethylsilylchlorid zum Bis(trimethylsilyl)-cyclopentadien umsetzen. Dies wiederum kann mit Bortrichlorid zu Trimethylsilyl-cyclopentadienyl-dichlorboran umgesetzt werden (analog zu J. of Organometallic Chem. (1979), 169, 327), welches schließlich analog zu J. of Organometallic Chem. (1979), 169, 373 mit Titantetrachlorid zum Dichlorboryl-cyclopentadienyltitantrichlorid umgesetzt werden kann. Diese zuletzt genannte Verbindung stellt bereits einen Prototyp der Verbindungen der Formel (III) dar; die zuletzt genannte Verbindung kann weiterhin selektiv mit Trimethylaluminium umgesetzt werden. wobei die beiden mit dem Boratom verbundenen Chloratome durch Methylgruppen ausgetauscht werden und wobei eine weitere Verbindung der Formel (III) aufgezeigt ist. Analog den Verfahrensbeschreibungen in J. Am. Chem. Soc (1983) 105, 3882 und Organometallics (1982) 1, 1591 kann das marktgängige Cyclopentadienyl-thallium mit Chlor-diphenylphosphin und weiter mit Butyllithium umgesetzt werden, wobei man einen Prototyp von Verbindungen der Formel (II) erhält.

Als ein weiteres Beispiel sei die Bildung von Dimethylstannyl-diphenylphosphininden durch Umsetzung von Inden zunächst mit Butyl-lithium, wie oben bereits genannt, und anschließend mit Chlordiphenylphosphin genannt; die weitere Umsetzung, zunächst erneut mit Butyl-lithium und dann mit Chlor-tributylzinn ergibt die genannte Verbindung, die nach weiterer Umsetzung mit Zirkontetrachlorid das Diphenylphosphino-indenyl-zirkoniumtrichlorid als einen Vertreter von Verbindungen der Formel (IV) gibt. Solche Synthesen und Herstellungsweisen sind dem auf dem Gebiet der

metallorganischen und der elementorganischen Chemie tatigen Fachmann geläufig und in zahlreichen Literaturstellen veröffentlicht, von denen oben nur einige exemplarisch angeführt wurden.

Die erfindungsgemäßen Metallocen-Verbindungen eignen sich hervorragend als Katalysatoren in Verfahren zur Homo- und Copolymerisation von einem oder mehreren $C_2$-$C_{40}$-Olefinen oder zur Copolymerisation von einem oder mehreren $C_2$-$C_{40}$-Olefinen mit einem oder mehreren $C_4$-$C_8$-Isolefinen, $C_2$-$C_8$-Alkinen oder $C_4$-$C_8$-Diolefinen in der Gas-, Lösungs-, Masse-, Hochdruck- oder Slurry-Phase bei -60 bis +250°C und 0,5 bis 5.000 bar Druck, wobei in Gegenwart oder Abwesenheit von linearen und verzweigten gesättigten oder aromatischen oder Alkylsubstituierten aromatischen $C_4$-$C_{20}$-Kohlenwasserstoffen oder von gesättigten oder aromatischen $C_2$-$C_{10}$-Halogenkohlenwasserstoffen gearbeitet werden kann. Solche Polymerisationen können in einem oder mehreren Reaktoren diskontinuierlich oder bevorzugt kontinuierlich durchgeführt werden. Im Falle mehrerer Reaktoren oder Reaktionszonen kann unter verschiedenen Polymerisationsbedingungen gearbeitet werden. Pro Mol Metallocen-Verbindungen werden $10^1$ bis $10^{12}$ Mol (Co)Monomere umgesetzt. Die erfindungsgemäßen Metallocen-Verbindungen können zusammen mit Cokatalysatoren eingesetzt werden. Das Mengenverhältnis zwischen Metallocen-Verbindung und Cokatalysator beträgt 1 bis 100.000 mol Cokatalysator pro mol Metallocen. Cokatalysatoren sind beispielsweise Aluminoxanverbindungen. Darunter werden solche der Formel

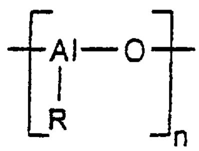

(XII)

verstanden, in der

R für $C_1$-$C_{20}$-Alkyl, $C_6$-$C_{12}$-Aryl oder Benzyl steht und

n eine Zahl von 2 bis 50, bevorzugt 10 bis 35 bedeutet.

Es ist ebenso möglich, ein Gemisch verschiedener Aluminoxane oder ein Gemisch von deren Vorläufern (Aluminiumalkyle oder Alkylaluminiumhalogenide) in Kombination mit Wasser (in gasförmiger, flüssiger, fester oder gebundener Form, etwa als Kristallwasser) einzusetzen. Das Wasser kann auch als (Rest)Feuchte des Polymerisationsmediums, des Monomers oder eines Trägers wie Silikagel zugeführt werden.

Die aus der eckigen Klammer von Formel (XI) herausragenden Bindungen enthalten als Endgruppen des oligomeren Aluminoxans R-Gruppen oder $AlR_2$-Gruppen. Solche Aluminoxane liegen in der Regel als Gemisch mehrerer von ihnen mit unterschiedlicher Kettenlänge vor. Die Feinuntersuchung hat auch Aluminoxane mit ringförmiger oder käfigartiger Struktur ergeben. Aluminoxane sind marktgangige Verbindungen. Im speziellen Fall von R = $CH_3$ wird von Methylaluminoxanen (MAO) gesprochen.

Weitere Cokatalysatoren sind Aluminiumalkyle, Lithiumalkyle oder Mg-organische Verbindungen, wie Grignard-Verbindungen oder teilhydrolysierte Bororganyle. Bevorzugte Cokatalysatoren sind Aluminoxane.

Die Aktivierung mit dem Cokatalysator bzw. die Erzeugung des voluminösen nicht- oder schwach-kooridinierenden Anions kann in dem Autoklaven oder in einem getrennten Reaktionsgefäß (Präformierung) durchgeführt werden. Die Aktivierung kann in Gegenwart oder Abwesenheit des/der zu polymerisierenden Monomeren erfolgen. Die Aktivierung kann in einem aliphatischen oder aromatischen oder halogenierten Lösungs- oder Suspensionsmittel oder auf der Oberfläche eines Katalysator-Trägermaterials durchgeführt werden.

Die Metallocen-Verbindungen und die Aluminoxane können sowohl als solche in homogener Form als auch einzeln oder gemeinsam in heterogener Form auf Trägern eingesetzt werden. Das Trägermaterial kann hierbei anorganischer oder organischer Natur sein, wie Kieselgel, $Al_2O_3$, $MgCl_2$, NaCl Cellulosederivate, Stärke und Polymere. Hierbei kann sowohl erst die Metallocen-Verbindung als auch erst das Aluminoxan auf den Träger gebracht werden und die jeweils anderen Komponenten danach zugesetzt werden. Gleichermaßen kann man aber auch die Metallocen-Verbindung in homogener oder heterogener Form mit dem Aluminoxan aktivieren und danach die aktivierte Metallocen-Verbindung auf den Träger bringen.

Trägermaterialien werden vorzugsweise thermisch und/oder chemisch vorbehandelt um den Wassergehalt bzw die OH-Gruppenkonzentration definiert einzustellen oder möglichst niedrig zu halten. Eine chemische Vorbehandlung kann z B in der Umsetzung des Trägers mit Aluminiumalkyl bestehen Anorganische Träger werden gewöhnlich vor Verwendung auf 100°C bis 1000°C während 1 bis 100 Stunden erhitzt. Die Oberfläche solcher anorganischer Trager, insbesondere von Silica ($SiO_2$), liegt zwischen 10 und 1000 $m^2/g$, vorzugsweise zwischen 100 und 800 $m^2/g$

Der Teilchendurchmesser liegt zwischen 0,1 und 500 Mikrometer (μ), vorzugsweise zwischen 10 und 200 μ.

Durch Homo- oder Copolymerisation umzusetzende Olefine, i-Olefine, Alkine und Diolefine sind beispielsweise Ethylen, Propylen, Buten-1, i-Buten, Penten-1, Hexen-1, Octen-1, 3-Methyl-buten-1, 4-Methyl-penten-1-, 4-Methyl-hexen-1, 1,3-Butadien, Isopren, 1,4-Hexadien, 1,5-Hexadien und 1,6-Octadien, Chloropren, Acetylen, Methylacetylen. Mit α,ω-Diolefinen kann weiterhin eine cyclisierende Polymerisation durchgeführt werden, bei der beispielsweise aus 1,5-Hexadien Poly-(methylen-1,3-cyclopentan) gebildet wird.

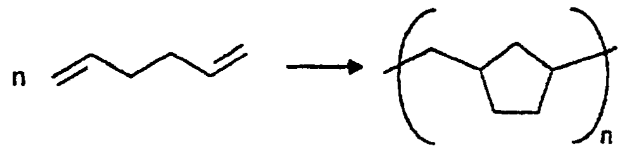

Benutzt man hierbei Trialkylsilyl-substituierte α,ω-Diolefine, kann nachträglich durch polymeranaloge Umsetzung eine funktionelle Gruppe eingeführt werden. Solche Olefine und Diolefine konnen weiterhin substituiert sein, beispielsweise mit Phenyl. substituiertem Phenyl. Halogen, der veresterten Carboxylgruppe, der Säureanhydridgruppe; Verbindungen dieser Art sind beispielsweise Styrol, Methylstyrol, Chlorstyrol, Fluorstyrol, Inden, 4-Vinyl-biphenyl, Vinyl-fluoren, Vinylanthracen, Methylmethacrylat, Ethylacrylat, Vinylsilan, Trimethylallylsilan, Vinylchlorid, Vinylidenchlorid, Tetrafluorethylen, Isobutylen, Vinylcarbazol, Vinylpyrrolidon, Acrylnitril, Vinylether und Vinylester. Weiterhin sind erfindungsgemäß ringöffnende Polyadditionen, etwa von Lactonen, wie ε-Caprolacton oder δ-Valerolacton, oder von Lactamen, wie ε-Caprolactam, möglich. Bevorzugte Monomere sind: Ethylen, Propylen, Buten, Hexen, Octen, 1,5-Hexadien, 1,6-Octadien, Methylmethacrylat, ε-Caprolacton, δ-Valerolacton und Acetylen. Es ist möglich, die genannten (Co)Polymerisationen in Gegenwart von Wasserstoff, etwa zur Molmassen-Einstellung, durchzuführen.

Die mit den erfindungsgemäßen Metallocen-Verbindungen durchzuführenden Homo- oder Copolymerisationen oder Polyadditionen werden im Bereich der angegebenen Temperaturen und Drücke adiabatisch oder isotherm durchgefuhrt Es handelt sich dabei um Hochdruckverfahren in Autoklaven oder Rohrreaktoren, um Losungsverfahren als auch um Polymerisation in Masse, um Verfahren in der Slurry-Phase in Rührreaktoren oder Schlaufenreaktoren sowie um Verfahren in der Gas-Phase, wobei die Drücke für die Slurry-, Lösungs- und Gas-Phase nicht über 65 bar hinausgehen. Solche Polymerisationen können auch in Gegenwart von Wasserstoff durchgeführt werden Alle diese Verfahren sind lange bekannt und dem Fachmann geläufig. Es ist nun ein Vorteil der erfindungsgemäßen Metallocen-Verbindungen, daß sie durch Auswahl der Substituenten sowohl als lösliche, gegebenenfalls auf Trägern aufgebrachte, als auch als unlösliche Metallocen-Verbindungen herstellbar sind. Lösliche Metallocen-Verbindungen wird man für das Hochdruck-Verfahren und das Lösungsverfahren einsetzen; heterogene Metallocen-Verbindungen wird man z.B. in der Gas-Phase einsetzen.

Die erfindungsgemäßen Metallocen-Verbindungen ermöglichen durch die Donor-Akzeptor-Brücke eine definierte Öffnung der beiden Cyclopentadienylgerüste in der Art eines Schnabels, wobei neben einer hohen Aktivitat eine hohe Stereoselektivität, eine kontrollierte Molekulargewichtsverteilung und ein einheitlicher Einbau von Comonomeren gewährleistet sind. Infolge einer definierten schnabelartigen Öffnung ist auch Platz für voluminöse Comonomere. Eine hohe Einheitlichkeit in der Molekulargewichtsverteilung ergibt sich weiterhin aus dem einheitlichen und definierten Ort der durch Einschub (Insertion) erfolgenden Polymerisation (Single Site Catalyst)

Die D/A-Struktur kann eine Extra-Stabilisierung der Katalysatoren bis hin zu hohen Temperaturen bewirken, so daß die Katalysatoren auch im Hochtemperaturbereich von 80 bis 250°C, bevorzugt 80 bis 180°C eingesetzt werden können. Die mögliche thermische Dissoziation der Donor-Akzeptor-Bindung ist reversibel und führt durch diesen Selbstorganisations-Prozeß und Selbstreparatur-Mechanismus zu besonders hochwertigen Katalysatoreigenschaften. Die thermische Dissoziation ermöglicht z.B. eine gezielte Verbreiterung der MolekulargewichtsVerteilung, wodurch die Polymere besser verarbeitbar werden. Dieser Effekt kommt z.B. auch bei solchen Katalysatoren zum Tragen, bei denen CpI und CpII durch je eine kovalente und eine D/A-Brücke verknüpft sind. Die erfindungsgemäßen D/A-Metallocenstrukturen ermöglichen z.B. ein mit klassischen Katalysatoren nicht erreichtes Ausmaß an defektfreier Polyethylenbildung. Entsprechend können die Ethen-Polymerisate außerordentlich hohe Schmelztemperaturen beispielsweise oberhalb von 135°C bis 160°C (Maximum der DSC-Kurve) aufweisen. Solche linearen Polyethylene, die direkt im Polymerisationsprozeß anfallen und Schmelztemperaturen von 140 bis 160°C (Maxima der DSC-Kurven), bevorzugt 142 bis 160°C, besonders bevorzugt 144 bis 160°C aufweisen, sind neu. Solche neuen hochschmelzenden Polyethylene zeigen gegebenüber den bekannten beispielsweise verbesserte mechanische Eigenschaften und Wärmeformbeständigkeit (Sterilisierbarkeit bei medizinischen Anwendungen) und eröffnen dadurch Anwendungsmoglichkeiten, die bisher für Polyethylen nicht möglich erschienen und beispielsweise bisher nur durch hochtaktisches Polypropylen erfüllbar waren. Weitere Merkmale sind hohe Schmelzenthalpien und hohe PE-Molmassen.

In einem weiten Temperaturbereich wird durch Polymerisations-Temperaturerhöhung zwar die PE-Molmasse erniedrigt, jedoch ohne nennenswerte Aktivitätsminderung und ohne daß insgesamt der Bereich technisch interessanter hoher PE-Molmassen und hoher PE-Schmelztemperaturen verlassen wird.

Es wurde weiterhin beobachtet, daß erfindungsgemäße Metallocen-Verbindungen geeigneter Symmetrie an geeigneten Monomeren eine regiospezifische (isotaktische, syndiotaktische) Polymerisation bewirken, jedoch im oberen Teil des genannten Temperaturbereichs am gleichen Monomer eine zunehmend unspezifische (ataktische) Verknüpfung der Monomereinheiten auslösen. Diese Erscheinung ist noch nicht vollständig untersucht, könnte jedoch in Übereinstimmung mit der Beobachtung stehen, daß koordinative Bindungen, die von einer ionischen Bindung überlagert sind, wie die Donor-Akzeptor-Bindungen in den erfindungsgemäßen Metallocen-Verbindungen, eine zunehmende Reversibilität bei höherer Temperatur zeigen. So wurde beispielsweise beider Ethylen-Propylen-Copolymerisation beobachtet, daß bei gleichem Angebot bei der Comonomerer bei tiefer Polymerisationstemperatur ein hoch Propylenhaltiges Copolymer gebildet wird, während mit steigender Polymerisationstemperatur der Propylengehalt zurückgeht, bis schließlich bei hoher Temperatur überwiegend Ethylen enthaltende Polymere entstehen.

Die reversible Dissoziation und Assoziation der D/A-Struktur und die dadurch möglich werdende gegeneinander erfolgende Rotation der Cp-Geruste kann schematisch wie folgt dargestellt werden:

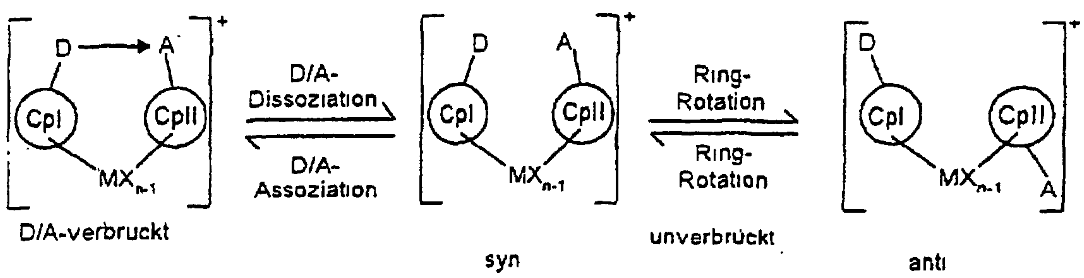


Eine weitere wertvolle Eigenschaft der erfindungsgemäßen D/A-Metallocen-Verbindungen besteht in der Möglichkeit zur Selbstaktivierung und damit einem Verzicht auf teure Cokatalysatoren, insbesondere im Falle von dianionischen $\widehat{X\;X}$-Derivaten. Hierbei bindet das Akzeptoratom A in der geöffneten Form der D/A-Metallocen-Verbindung einen X-Liganden, beispielsweise eine Seite eines Dianions unter Ausbildung einer zwitterionischen Struktur und erzeugt damit beim Übergangsmetall eine positive Ladung, während das Akzeptoratom A eine negative Lädung annimmt Eine solche Selbstaktivierung kann intramolekular oder intermolekular erfolgen. Dies sei am Beispiel der bevorzugten Verknüpfung zweier X-Liganden zu einem Chelat-Liganden, nämlich des Butadiendiyl-Derivates, verdeutlicht:

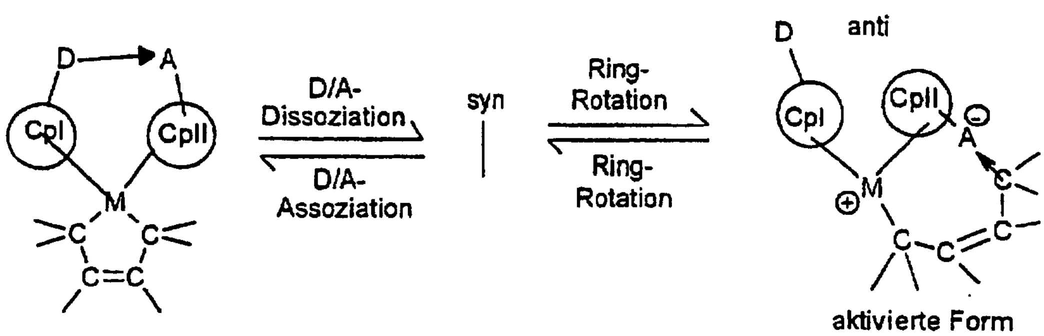


Die Bindungsstelle zwischen dem Übergangsmetall M und H oder substituiertem oder nicht substituiertem C, etwa dem noch gebundenen C des im Formelbeispiel gezeigten Butadiendiyl-Dianions ist sodann der Ort für die Olefin-Insertion zur Polymerisation.

Weiterhin sind die erfindungsgemäß einzusetztenden π-Komplex-Verbindungen bzw. Metallocen-Verbindungen geeignet zur Herstellung sowohl thermoplastischer als auch elastomerer Polymerisate nach den verschiedenen, oben genannten Herstellungsverfahren, wobei sowohl hochkristalline Polyrnere mit optimiertem Schmelzbereich als auch amorphe Polymere mit optimierter Glastemperatur zugänglich sind.

## Beispiele

Alle Reaktionen wurden unter streng anaeroben Bedingungen und unter Verwendung von Schlenk-Techniken bzw. der Hochvakuumtechnik durchgefuhrt. Die verwendeten Lösungsmittel waren trocken und mit Argon gesättigt. Chemische Verschiebungen δ sind in ppm angegeben, relativ zum jeweiligen Standard: $^{1}H$(Tetramethylsilan), $^{13}C$ (Tetramethylsilan), $^{31}P$(85%ige $H_3PO_4$), $^{11}B$(Bortrifluorid-Etherat-18,1 ppm). Negative Vorzeichen bedeuten eine Verschiebung zu höherem Feld.

**Beispiel 1** (Bis-(trimethylsilyl)-cyclopentadien, Verbindung 1)

14,7 g (0,106 mol) Trimethylsilyl-cyclopentadien (bezogen von Fa Fluka) und 150 ml Tetrahydrofuran (THF) wurden in einen Reaktionskolben gegeben und auf 0°C abgekühlt. Hierzu wurden 47,4 ml einer Lösung von Butyllithium in n-Hexan (2,3 molar; Gesamtmenge 0,109 mol) tropfenweise während 20 Minuten zugefügt. Nach vollständiger Zugabe wurde die gelbe Lösung für eine weitere Stunde geruhrt; danach wurde das Kältebad entfernt. Bei Raumtemperatur wurde die Lösung für eine weitere Stunde gerührt und danach auf -20°C abgekühlt Dann wurden 14,8 ml (0,117 mol) Trimethylsilylchlorid tropfenweise während 10 Minuten zugegeben und das Reaktionsgemisch bei -10°C zwei Stunden gerührt. Danach wurde das Kältebad entfernt und die Reaktionslösung auf Raumtemperatur erwärmt und fur eine weitere Stunde nachgerührt. Das Reaktionsgemisch wurde durch Celite filtriert; das Filter wurde mit Hexan gewaschen, und das Hexan wurde von den vereinigten Filtraten im Vakuum entfernt. Das Rohprodukt ergab bei einer Destillation bei 26°C unter 0,4 mbar 19 g reines Produkt der Verbindung 1 (85 % der theoretischen Ausbeute). Siedepunkt und NMR-Daten entsprechen den Literaturangaben (J. Organometallic Chem. 29 (1971), 227; ibid. 30 (1971), C 57; J. Am. Chem. Soc, 102, (1980), 4429; J. Gen. Chem. USSR, Eng. Transl. 43 (1973), 1970, J. Chem. Soc., Dalton Trans. 1980, 1156)
$^{1}H$-NMR (400 MHz, $C_6D_6$): δ = 6,74 (m,2H), 6,43 (m,2H), -0,04 (s,18H).

**Beispiel 2** (Trimethylsilyl-cyclopentadienyl-dichlorboran, Verbindung 2)

In einen Rundkolben, der mit einem Trockeneis-Kühlbad ausgerüstet war, wurden 16 g (0,076 mol) der Verbindung 1 gegeben. 8,9 g (0,076 mol) $BCl_3$ wurden bei -78°C in ein Schlenk-Rohr kondensiert und danach tropfenweise während einer Zeit von 5 Minuten in den Rundkolben gegeben. Die Reaktionsmischung wurde langsam während 1 Stunde auf Zimmertemperatur erwärmt und dann für weitere 2 Stunden auf 55 bis 60°C gehalten. Alle flüchtigen Verbindungen wurden im Vakuum (3 mm Hg = 4 mbar) entfernt. Die anschließende Destillation bei 39°C und 0,012 mbar ergab 14,1 g der Verbindung 2 (85 % der theoretischen Ausbeute). Das $^{1}H$-NMR stimmt mit den Literaturangaben überein und zeigte, daß eine Reihe von Isomeren hergestellt worden waren (vgl. J. Organometallic Chem. 169 (1979), 327). $^{11}B$-NMR (64,2 MHz, $C_6D_6$): δ = +31,5.

**Beispiel 3** (Dichlorboranyl-cyclopentadienyl-titantrichlorid, Verbindung 3)

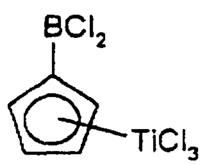

3

In ein 250 ml-Schlenk-Rohr wurden 11,4 g (0,052 mol) der Verbindung 2 und 100 ml Methylenchlorid ($CH_2Cl_2$) gegeben. Diese Lösung wurde auf -78°C gekühlt, und 9,8 g (5,6 ml, 0,052 mol) Titantetrachlorid wurden während 10 Minuten zugetropft. Die erhaltene rote Lösung wurde langsam auf Raumtemperatur erwärmt und während weiterer 3 Stunden gerührt. Das Lösungsmittel wurde im Vakuum entfernt, und man erhielt ein schmutzig-gelbes Produkt 200 ml Hexan wurden zum rohen Feststoff gegeben, und die erhaltene gelbe Lösung wurde filtriert und über Nacht im Kühlschrank gekühlt, wobei 12,3 g (79 % der theoretischen Ausbeute) gelber Kristalle der Verbindung 3 erhalten wurden. Es sei darauf hingewiesen, daß in J. Organometallic Chem. 169 (1979), 373, 62 % der theoretischen Ausbeute erhalten wurde, wobei die Reaktion in einem Kohlenwasserstoff-Lösungsmittel, wie Petroleumether oder Methylcyclohexan ausgeführt wurde.
$^{1}H$-NMR (400 Mhz, $CD_2Cl_2$): δ = 7,53 (t, J = 2,6 Hz, 2H), 7,22 (t, J = 2,6 Hz. 2H) $^{11}B$-NMR (64,2 MHz, $CD_2Cl_2$): δ = +33.

**Beispiel 4** (Dimethylboranyl-cyclopentadienyl-titantrichlorid, Verbindung 4)

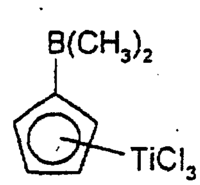

4

In einem Rundkolben wurden 2,37 g (0,0079 mol) der Verbindung 3 in 100 ml Hexan gelöst. Diese Lösung wurde auf 0°C gekühlt und tropfenweise mit 4 ml einer 2-molaren Lösung von Aluminiumtrimethyl in Toluol (0,008 mol) versetzt. Nach vollständiger Zugabe wurde das Kältebad entfernt und alle flüchtigen Anteile im Vakuum entfernt. Der verbleibende gelbe Feststoff wurde nunmehr in Pentan aufgelöst, feste Anteile wurden abfiltriert, und das klare Filtrat wurde auf -78°C abgekühlt, wobei 1,5 g (74 % der theoretischen Ausbeute) an Verbindung 4 erhalten wurden. Es sei angemerkt, daß in J Organometallic Chem 169 (1979). 373 eine Ausbeute von 87 % der theoretischen Ausbeuten angegeben werden, wobei Tetramethylzinn als Alkylierungsmittel verwendet wurde; es war jedoch nicht möglich, die Verbindung 4 frei vom entstehenden Trimethylzinnchlorid zu erhalten.
$^1$H-NMR (400 Mhz, $CD_2Cl_2$): δ = 7,48 (t, J = 2,5 Hz, 2H), 7,23 (t, J = 2,5 Hz, 2H), 1,17 (s, 6H). $^{11}$B-NMR (64,2 MHz, $CD_2Cl_2$): δ = +56.

**Beispiel 5** (Diphenylphosphin-cyclopentadienyl-lithium, Verbindung 6)

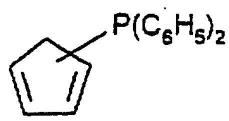

5

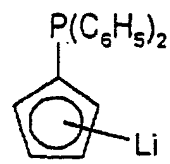

6

50 g (0,186 mol) Cyclopentadienyl-thallium (bezogen von Fa. Fluka) wurden gemeinsam mit 300 ml Diethylether in einen 500 ml-Kolben eingefüllt. Die Aufschlämmung wurde auf 0°C gekühlt und 34,2 ml (0,186 mol) Diphenylchlorphosphin innerhalb von 10 Minuten zugetropft. Die Aufschlämmung wurde danach auf Zimmertemperatur angewärmt und während einer Stunde gerührt und schließlich durch eine Fritte filtriert. Das Lösungsmittel wurde sodann im Vakuum abgezogen und hinterließ 39,5 g (85 % der theoretischen Ausbeute) des Zwischenproduktes Diphenylphosphino-cyclopentadien, Verbindung 5. Ein Anteil von 18,6 g (0,074 mol) der Verbindung 5 wurde sodann mit Toluol verdünnt und auf 0°C abgekühlt. Zu dieser Lösung wurden 33,2 ml einer 2,24-molaren Lösung von Butyl-lithium in Hexan (0,074 mol) während 10 Minuten zugegeben. Nach dem Anwärmen auf Raumtemperatur und nach Rühren während 2 Stunden ergab die gelbe Lösung einen Niederschlag, der filtriert und mit Toluol und anschließend mit Hexan gewaschen wurde. Nach dem Trocknen im Vakuum wurden 13,2 g der Verbindung 6 (70 % der theoretischen Ausbeute) als bräunliches Pulver erhalten (vgl. J. Am. Chem. Soc. 105 (1983), 3882; Organometallics 1 (1982), 1591).
$^1$H-NMR (400 MHz, $d_8$THF): δ = 7,3 (m, 4H), 7,15 (m, 6H), 5,96 (m. 2H), 5,92 (m, 2H), $^{31}$P-NMR (161,9 MHz, $d_8$THF): δ = -20.

**Beispiel 6** (($(C_6H_5)_2P \rightarrow B(CH_3)_2$-verbrücktes Bis-(cyclopentadienyl)-titandichlorid, Verbindung 7)

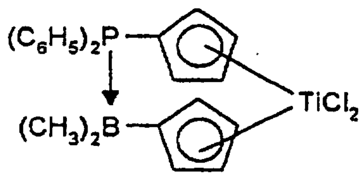

7

In einen Rundkolben wurden 0,36 g (0,00139 mol der Verbindung 6 und 20 ml Toluol gegeben. Die entstehende Lösung wurde auf -20°C gekühlt und eine Lösung von 0,36 g (0,00139 mol) der Verbindung 4 in 20 ml Toluol während 20 Minuten zugetropft. Nach Beendigung des Zutropfens wurde die Lösung innerhalb von 2 Stunden auf Raumtemperatur erwärmt und bei dieser Temperatur fur eine zusätzliche Stunde gerührt. Unlösliches Material wurde über eine Fritte entfernt, und das Lösungsmittel wurde im Vakuum abdestilliert. Der rote ölige Feststoff wurde dann mit Hexan gewaschen, das abdekantiert wurde, und der Feststoff wurde erneut im Vakuum getrocknet. Dabei erhielt man 0,28 g (42 % der theoretischen Ausbeute) der Verbindung 7 als rotes Pulver.
$^1$H-NMR (300 MHz, $CD_2Cl_2$): δ = 7,6 - 7,3 (br, m, 10H), 6,92 (m, 2H), 6,77 (m, 4H), 6,60 (m, 2H), 0,29 (d, $J_{PH}$ = 19 Hz, 6H); $^{31}$P-NMR (161,9 MHz, $CD_2Cl_2$) δ = 17,1 (br); $^{11}$B-NMR (64,2 MHz, $CD_2Cl_2$): δ = -29 (br).

**Beispiel 7** (Tributylstannyl-diphenylphosphino-inden, Verbindung 8)

10 g (0,086 mol) Inden wurden in einen Rundkolben gegeben, mit 200 ml Diethylether verdünnt und auf -20°C gekühlt. Zu dieser Lösung wurden 36 ml einer 2,36-molaren Lösung von Butyl-lithium (0,085 mol) in n-Hexan gegeben, wobei die Lösung sofort eine gelbe Farbe annahm. Das Kältebad wurde entfernt, und man ließ das Reaktionsgemisch auf Raumtemperatur erwärmen und rührte das Reaktionsgemisch während einer weiteren Stunde. Danach wurde das Reaktionsgemisch wieder auf 0°C abgekühlt, und 19 g (15,9 ml, 0,086 mol) Diphenylchlorphosphin wurden unter Bildung eines Niederschlags zugegeben. Das Kältebad wurde wieder entfernt, und die Lösung konnte sich auf Zimmertemperatur erwärmen, während für eine weitere Stunde nachgerührt wurde. Die Lösung wurde dann erneut auf -20°C gekühlt, und 36 ml (0,085 mol) Butyl-lithium in n-Hexan wurden zugetropft. Nach beendeter Zugabe wurde das Kältebad wieder entfernt, und die Temperatur stieg auf Raumtemperatur; die Lösung wurde für weitere 1,5 Stunden nachgerührt. Die Aufschlämmung wurde dann wiederum auf 0°C gekühlt und 28 g (0,086 mol) Tributylzinnchlorid wurden tropfenweise zugefügt. Die erhaltene Aufschlammung wurde auf Raumtemperatur erwärmt und für weitere 1,5 Stunden gerührt, danach durch eine Fritte filtriert und das Lösungsmittel im Vakuum entfernt Es hinterblieben 46,9 g der Verbindung 8 (92 % der theoretischen Ausbeute) als ein schweres gelbes Ol
$^1$H-NMR (400 MHz, $CDCl_3$): δ = 7,5 - 7,3 (m,6H), 7,28 (br s,6H), 7,14 (pseudo-d t, 7,3 Hz/1,0 Hz, 1H), 7,08 (t, J = 7,3 Hz, 1H), 6,5 (br m, 1H), 4,24 (br s, 1H), 1,4 - 1.25 (m, 6H), 1,25 - 1,15 (m,6H), 0,82 (t, J = 7,2 Hz, 9H), 0,53 (t, J = 8 Hz, 6H), $^{31}$-NMR (161,9 MHz, $CDCl_3$): δ = -20,6

**Beispiel 8** (Diphenylphosphino-indenyl-zirkoniumtrichlorid, Verbindung 9)

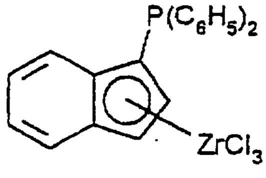

9

Eine Lösung von 37 g (0,0628 mol) der Verbindung 8 in 300 ml Toluol wurde während 3 Stunden zu einer Aufschlämmung von 14,6 g $ZrCl_4$ (99.9 %ig, 0,0628 mol, bezogen von Fa. Aldrich) in 100 ml Toluol bei Raumtemperatur gegeben. Die Lösung wurde sofort rot und ging langsam in orange und schließlich in gelb über. Nach 4-stündigem Nachrühren wurde der gelbe Niederschlag abfiltriert und mit Toluol und dann mit Hexan gewaschen. Der Feststoff

wurde im Vakuum getrocknet und ergab 15,3 g (50 % der theoretischen Ausbeute) der Verbindung 9 als ein frei fließendes gelbes Pulver. Die Ausbeute ließ sich ohne weiteres auf über 70 % steigern, wenn man bei tieferer Temperatur arbeitete, z.B. 30 min bei -30°C und 5 Stunden bei 0°C. Das Produkt konnte weiter gereinigt werden, indem man restliche Zinnverbindung unter Benutzung von Pentan in einem Soxhlet-Extraktor auswusch (Extraktionszeit: 8 Stunden)

**Beispiel 9** (($(C_6H_5)_2P \rightarrow BCl_2$-verbrucktes Indenyl-cyclopentadienyl-zirkoniumdichlorid, Verbindung 10)

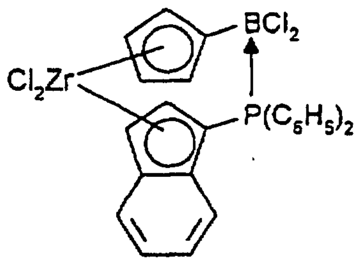

10

In ein Schlenk-Rohr wurden 4,43 g (0,0089 mol) der gereinigten Verbindung 9 und 100 ml Toluol gegeben. Zu dieser Aufschlämmung wurden 1,95 g (0,0089 mol) der Verbindung 2 gegeben. Die gelbe Aufschlämmung wurde während 6 Stunden bei Raumtemperatur gerührt; wahrend dieser Zeit bildete sich ein blaßweißer Niederschlag. Dieser Niederschlag (4,1 g, 75 % der theoretischen Ausbeute) wurde durch Filtration gewonnen und als im wesentlichen reines Material befunden.
$^1$H-NMR (500 MHz, $CD_2Cl_2$): δ = 7,86 (pseudo ddd, J = 8,5/2,511 Hz, 1H), 7,75 - 7,55 (m,10H), 7,35 (pseudo ddd, J = 8,5/6,9/0,9 Hz, 1H), 7,32 (br t, J = 3,1 Hz, 1H), 7,22 (pseudo ddd, J = 8,8/6,8/1,1 Hz, 1H), 7,06 (pseudo ddd, J = 3,4/3,4/0,8 Hz, 1H), 6,92 (m,1H), 6,72 (m, 1H), 6,70 (br m, 1H), 6,61 (pseudo q, J = 2,3 Hz, 1H), 6,53 (br d, 8,7 Hz, 1H); $^{31}$P-NMR (161,9 MHz, $CD_2Cl_2$): δ = 6,2 (br, m); $^{11}$B (64,2 MHz, $CD_2Cl_2$): δ = -18 (br).

**Beispiel 10** (($(C_6H_5)_2P \rightarrow B(CH_3)_2$-verbrücktes Indenyl-cyclopentadienyl-zirkoniumdichlorid, Verbindung 11)

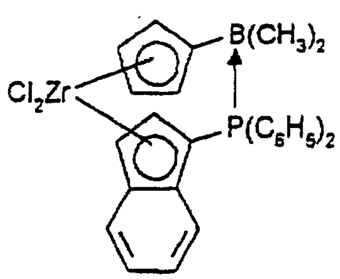

11

Zu 1,5 g (0,00247 mol) Verbindung 10 aus Beispiel 9 wurden 50 ml Toluol gegeben. Die Aufschlämmung wurde auf 0°C gekühlt, und 1,2 ml einer 2-molaren Losung von Trimethylaluminium in Hexan (0,0024 mol) wurden während 5 Minuten dazu getropft. Nach vollständiger Zugabe wurde das Kühlbad entfernt, und die Lösung konnte sich auf Raumtemperatur erwärmen, wahrend fur 2 Stunden weiter gerührt wurde. Der restliche Niederschlag wurde abfiltriert und das Lösungsmittel vom Filtrat im Vakuum abgezogen, wobei 0,37 g (26 % der theoretischen Ausbeute) der Verbindung 11 als ein bräunlicher Feststoff zurückblieben.
$^{31}$P-NMR (161,9 MHz, $CD_2Cl_2$): δ = 14,6, $^{11}$B-NMR (64,2 MHz, $CD_2Cl_2$). δ = -28

**Beispiel 11** (Trimethylsilyl-inden, Verbindung 12)

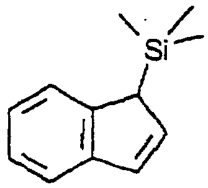

12

In einen Rundkolben, der 100 ml THF enthielt und auf 0°C gekühlt war, wurden 25 ml Inden (0,213 mol, über $CaH_2$ im Vakuum destilliert) gegeben. 94 ml einer 2,3-molaren Lösung von Butyl-lithium in Hexan (0,216 mol) wurden während 20 min zugegeben. Nach vollständiger Zugabe wurde 20 min lang gerührt, dann auf Raumtemperatur erwärmt und weitere 30 min gerührt. Nach Abkühlung auf - 20°C wurden 27,5 ml (0,216 mol) Trimethylchlorsilan zugetropft, wobei eine leicht trübe orangefarbene Lösung entstand. Nach 1 h Rühren bei -10°C und 1,5 h bei 0°C wurde auf Raumtemperatur erwärmt und das Lösungsmittel im Vakuum entfernt. Nach erneuter Auflösung in Hexan wurde LiCl abfiltriert und das Hexan im Vakuum entfernt Destillation des Produktes (0,045 mbar, 58 bis 60°C) ergab 26,6 g (66 % der theoretischen Ausbeute) 12.
$^1$H-NMR (400 MHz, $CDCl_3$): δ = 7,49 (t, J = 7,6 Hz, 1 H), 7,28 (ddd, J = 7,3/7,2/1 Hz, 1 H), 7,21 (ddd, J = 7,3/7,3/1,1 Hz, 1 H), 6,96 (dd, J = 5,6/1,2 Hz, 1 H), 6,69 (dd, J = 5,3/1,8 Hz, 1 H), 3,56 (s, 1 H), 0,0 (s, 9 H)

**Beispiel 12** (Bis-(trimethylsilyl)-inden, Verbindung 13)

25,4 g (0,135 mol) der Verbindung 12 wurden in einen Rundkolben gegeben, der 100 ml THF enthielt und auf 0°C gekühlt war. 59 ml einer 2,3-molaren Lösung von Butyl-lithium in Hexan (0,136 mol) wurden während 20 min zugegeben. Nach vollständiger Zugabe wurde 20 min gerührt und dann auf Raumtemperatur erwärmt. Nach 30 min Rühren wurde auf -20°C gekühlt, und es wurden 17,3 ml Trimethylchlorsilan (0,136 mol) zugetropft, wobei eine leicht trübe orangefarbene Lösung entstand. Es wurde 1 h bei 0°C und 1 h bei Raumtemperatur gerührt und dann das Lösungsmittel im Vakuum entfernt Nach Wiederauflosung in Hexan wurde LiCl abfiltriert und das Hexan im Vakuum entfernt. Man erhielt 32 g (90 % der theoretischen Ausbeute) von 13 als Öl Vergl. J Organometal Chem 23 (1970), 407; dort Hexan statt THF
$^1$H-NMR (400 MHz, $CDCl_3$): δ = 7,62 (d, J = 7,6 Hz, 1 H), 7,52 (d, J = 7,5 Hz, 1 H), 7,23 (ddd, J = 7,35/7,3/0,9 Hz, 1 H), 6,9 (d, J = 1,7 Hz, 1 H), 3,67 (d, J = 1,6 Hz, 1 H), 0,38 (s, 9 H), 0,0 (s, 9 H).

**Beispiel 13** (Trimethylsilyl-dichlorboranyl-inden, Verbindung 14)

In ähnlicher Weise wie zur Herstellung von Verbindung 2 wurden 12,3 g (0,047 mol) Verbindung 13 in einen Rundkolben gegeben, der auf -30°C gekühlt war und einen mit Trockeneis gekühlten Rückflußkühler hatte, Hierzu wurden 5,6 g (0,046 mol) $BCl_3$ gegeben. Nach vollstandiger Zugabe wurde das Kühlbad entfernt, und das Reaktionsgemisch erwärmte sich auf Raumtemperatur und wurde 3 h gerührt. Die Temperatur wurde dann 6 h lang auf 55°C angehoben. Nach Abkühlung und Entfernung der flüchtigen Anteile im Vakuum wurde das Rohprodukt erhalten. Destillation unter Hochvakuum lieferte das gereinigte Produkt, dessen Hauptisomer wie folgt identifiziert wurde:
$^1$H-NMR (200 MHz, $CDCl_3$): δ = 8,3 (d, J = 7 Hz, 1 H), 8,1 (d, J = 1,8 Hz, 1 H), 7.5 (dd, J = 7,0/1,2 Hz, 1 H), 7,4 (m, 3 H), 4,0 (d, J = 1,8 Hz, 1 H), 0,1 (s, 9 H); $^{11}$B (64,2 MHz, $CD_2Cl_2$): δ = 38 (br).

**Beispiel 14** (($(C_6H_5)_2P{\rightarrow}BCl_2$-verbrücktes Bis-(indenyl)-zirkomumdichlorid, Verbindung 15)

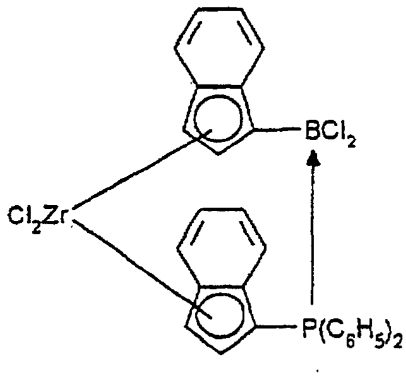

meso-15

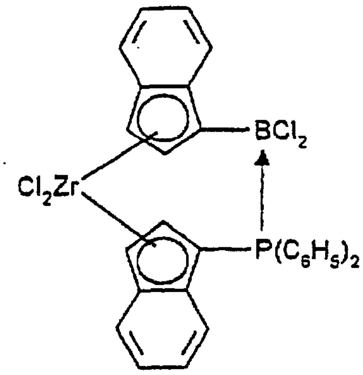

rac-15

Zu einer Aufschlämmung von 8,3 g von Verbindung 9 (0,017 mol) in 200 ml Toluol wurden 4,5 g der Verbindung 14 (0,017 mol) gegeben, das Gemisch wurde auf 50°C erwärmt und 5 h gerührt. Nach Abkühlen und Filtration wurden 200 ml Hexan zugegeben, worauf aus der klaren gelben Lösung ein Niederschlag ausfiel, der filtriert und im Vakuum getrocknet wurde. Das Produkt wurde als meso-Isomer von 15 gemäß seiner Röntgenanalyse identifiziert. Die P→B-Bindungslänge der Brücke wurde zu 2,01 Å bestimmt. Durch Konzentration der Toluol/Hexan-Lösung auf etwa 10 ml und weitere Zugabe von 200 ml Hexan erhielt man einen zweiten Niederschlag, der als das racemische Isomer von 15 bestimmt wurde

**Beispiel 15** (N,N-Dimethyl-O-(methylsulfonyl)-hydroxylamin, Verbindung 16)

$$(CH_3)_2NOSO_2CH_3 \qquad \underline{16}$$

9,0 g N,N-Dimethyl-O-hydroxylamin-hydrochlorid (0,092 mol) wurden in 70 ml $CH_2Cl_2$ suspendiert, das 20 g Triethylamin (0,2 mol) enthielt, und auf -10°C gekühlt. 9,5 g Methylsulfonylchlorid (0,083 mol), gelöst in 70 ml $CH_2Cl_2$, wurden langsam zur gekühlten Suspension getropft. Nach vollständiger Zugabe wurde 1 h nachgerührt. Danach wurde Eiswasser zum Reaktionsgemisch gegeben und die organische Phase abgetrennt. Das übriggebliebene Wasser wurde mit Ether gewaschen. Waschether und die $CH_2Cl_2$-Fraktion wurden vereinigt, über $Na_2SO_4$ getrocknet, und die Lösungsmittel wurden im Vakuum bei -10°C entfernt. Es hinterblieben 5,9 g (46 % der theoretischen Ausbeute) an Verbindung 16 als Öl, das bei -20°C aufbewahrt wurde.Vgl. Angew. Chem., Int. Ed. Engi 17 (1978), 687.
$^1$H-NMR (400 MHz, $CDCl_3$): δ= 3,03 (s, 3H), 2,84 (s, 6H)

**Beispiel 16** (N,N-Dimethylamino-cyclopentadienyl-lithium, Verbindung 17)

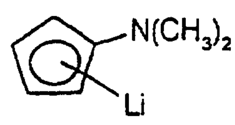

17

Eine Losung von 3 g Cyclopentadienyl-lithium (0,042 mol) in 30 ml THF wurde bei -30°C langsam zu einer Lösung von 5,9 g der Verbindung 16 (0,042 mol) in 20 ml THF gegeben. Das Gemisch wurde dann auf -20°C erwärmt und 30 min gerührt. Dann wurde Hexan zugegeben und die Lösung filtriert. Danach wurden 1,8 ml einer 2,3-molaren

Lösung von Butyl-lithium (0,042 mol) in Hexan bei -20°C zugesetzt, wodurch ein Niederschlag entstand. Der Niederschlag wurde abfiltriert und 2 mal mit je 20 ml Hexan gewaschen. Nach Trocknung im Vakuum erhielt man 2,0 g (40 % der theoretischen Ausbeute) der Verbindung 17 als weißes Puiver. Vgl. Angew. Chem., Int. Ed. Engl. 19 (1980), 1010. $^1$H-NMR (400 MHz, THF): δ = 5,34 (br d, J = 2,2 Hz, 2H), 5,15 (br d, J = 2,2 Hz, 2H), 2,56 (s, 6H).

**Beispiel 17** ($(CH_3)_2N \rightarrow B(CH_3)_2$-verbrücktes Bis-(cyclopentadienyl)-titandichlorid, Verbindung 18)

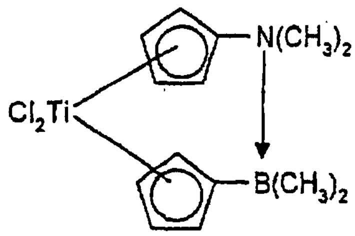

18

Eine Lösung von 0,18 g der Verbindung 4 (0,7 mmol) in 10 ml Toluol wurde bei -20°C während 10 min zu einer Suspension von 0,081 g der Verbindung 17 (0,7 mmol) in 10 ml Toluol gegeben, wobei eine tiefrote Losung entstand. Nach Anwärmen auf Raumtemperatur während 2 h wurde die Lösung filtriert und das Losungsmittel im Vakuum entfernt. Nach Wiederauflösung des entstandenen roten Pulvers in 10 ml warmen Toluol und Abfiltrieren von unlöslichem Material wurde die Lösung über Nacht im Kühlschrank aufbewahrt, wobei sich 0,1 g (43 % der theoretischen Ausbeute) als rote Nadeln bildeten.
$^1$H-NMR (400 MHz, $CD_2Cl_2$); δ = 6,85 (t, J = 2,3 Hz, 2H), 6,15 (t, J = 2,3 Hz, 2H), 6,1 (t, J = 2,8 Hz, 2H), 5,57 (t, J = 2,8 Hz, 2H), 1,98 (s, 6H), 0,35 (s, 6H); $^{11}$B-NMR (64,2 MHz, $CD_2Cl_2$): δ = 2,8 (br).
Die Formel 18a zeigt das Ergebnis der Röntgenstrukturanalyse.

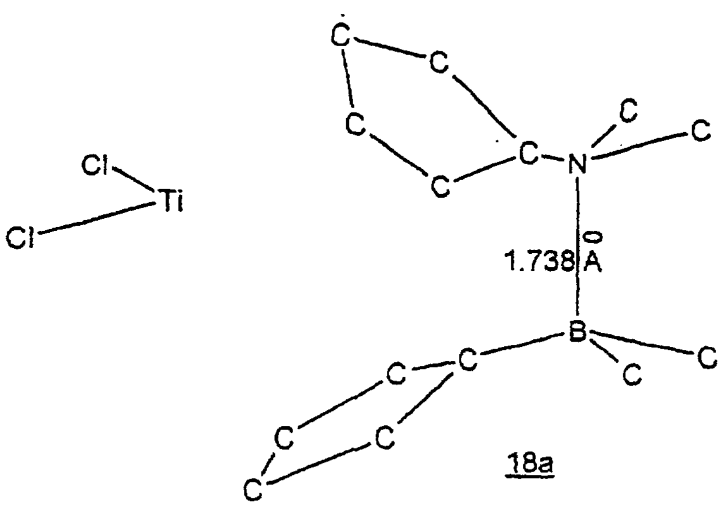

18a

**Beispiel 18** (Tributylstannyl-diisopropylphosphino-inden, Verbindung 19)

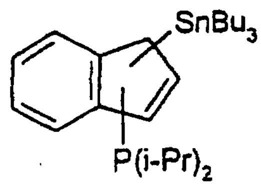

19

In einen Rundkolben, der 3,8 g (0,033 mol) Inden enthielt, wurden 100 ml Ether gegeben; es wurde auf -20°C gekühlt. Zu dieser Lösung wurden 14,4 ml einer 2,3 molaren Lösung von Butyl-lithium in Hexan (0,033 mol) innerhalb 5 Minuten gegeben, wobei eine gelbe Lösung entstand. Nach Entfernung des Kältebades wurde die Lösung auf Raumtemperatur erwärmt und 1,5 h nachgerührt Danach wurde das Reaktionsgemisch auf 0°C abgekühlt und 5,0 g Chlordiisopropylphosphin (0,033 mol) zugegeben, wodurch ein Niederschlag entstand. Nach Entfernung des Kältebades wurde die Lösung auf Raumtemperatur erwarmt und 1 h gerührt. Danach wurde die Lösung auf -20°C gekühlt und 14,4 ml einer 2,3 molaren Lösung von Butyl-lithium in Hexan (0,033 mol) zugetropft Nach vollständiger Zugabe wurde das Kältebad entfernt, die Lösung langsam auf Raumtemperatur erwärmt und 1,5 h nachgerührt. Nach Abkühlung der Aufschlämmung auf 0°C wurden 10,1 g Chlortributylzinn (0,031 mol) zugetropft. Die entstehende Aufschlämmung wurde auf Raumtemperatur erwarmt und 1,5 h gerührt. Der Ether wurde i. Vak entfernt und das Rohprodukt erneut in Hexan aufgelöst, abfiltriert und das Filtrat i. Vak. getrocknet, wobei 16.6 g der Verbindung 19 (Ausbeute: 97 %) als schweres gelbes Öl übrigblieben Zwei Isomere wurden in einem Verhältnis von 1,5:1 erhalten. Das Hauptisomer wurde wie folgt identifiziert: $^1$H NMR (400 MHz, $CD_2Cl_2$) $\delta$ 7,71 (d, J = 7,2 Hz, 1 H), 7,41 (d, J= 7,3 Hz, 1 H), 7,13 (m, 2 H), 6,96 (m, 1 H), 4,28 (s mit Sn Satelliten, 1 H), 2,21 (m, 1 H), 1,54 (m, 1 H), 1,45 - 0.65 (m, 39 H) $^{31}$P NMR (161,9 MHz, $CD_2Cl_2$) $\delta$ - 11,3 ppm. Das Nebenisomer wurde wie folgt identifiziert: $^1$H NMR (400 MHz, $CD_2Cl_2$) $\delta$ 7,6 (d, J = 7,4 Hz, 1 H), 7,46 (d, J = 7,2 Hz, 1 H), 7, 26 (t, J = 7,5 Hz, 1 H), 7,1 (m, 1 H), 6,71 (m, 1 H), 3,48 (m, 1 H), 2,21 (m, 1 H), 1,54 (m, 1 H), 1,45 - 0,65 (m, 39 H). $^{31}$P NMR (161,9 MHz, $CD_2Cl_2$) d -11,5 ppm.

**Beispiel 19** (Diisopropylphosphino-indenyl-zirkoniumtrichlond, Verbindung 20)

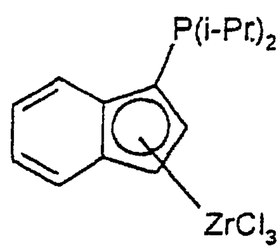

20

Eine Lösung von 15,0 g der Verbindung 19 (0,029 mol) in 50 ml Toluol wurde zu einer Aufschlämmung von 6,7 g (0,029 mol) 99,9 %igem $ZrCl_4$ in 300 ml Toluol bei - 78°C gegeben. Nach vollständiger Zugabe wurde das Reaktionsgemisch 0,5 h bei - 30°C und anschließend 4 h bei 0°C gerührt. Der entstehende gelbe Niederschlag wurde abfiltriert und mit Toluol und Hexan gewaschen Die Feststoffe wurden i. Vak. getrocknet, wobei 8,8 g der Verbindung 20 (Ausbeute 71 %) als freifließendes gelbes Pulver übrigblieben. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt. Wegen der Unlöslichkeit der entstehenden Verbindung wurde kein $^1$H NMR erhalten.

**Beispiel 20** (Diisopropylphosphino-dichlorboranyl-verbrucktes Indenyl-cyclopentadienyl-zirkonium-dichlorid, Verbindung 21)

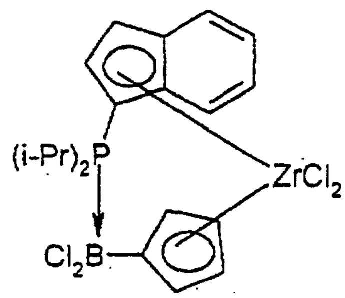

21

In ein Schlenk-Rohr wurden 0,52 g (0,0012 mol) der Verbindung 20 und 30 ml Toluol gegeben. 0,27 g (0,0012) mol der Verbindung 2 wurden innerhalb 5 Minuten zu dieser Aufschlämmung gegeben. Die gelbe Aufschlämmung wurde 3 h bei Raumtemperatur gerührt, wobei eine leicht trübe Lösung übrigblieb. Der Niederschlag wurde durch Filtration entfernt, wobei eine hellgelbe Toluollosung übrigblieb Nach Entfernung des Toluols i. Vak. blieb das Produkt als weißlicher Feststoff in einer Menge von 0,47 g (Ausbeute: 87 %) übrig. $^{1}H$ NMR (400 MHz, $CD_2Cl_2$) δ 7,84 (pseudo dd, J = 8,5, 0,8 Hz, 1 H), 7,73 (d, J = 8,8 Hz, 1 H), 7,5 (pseudo dt, J = 7,8, 0,8 Hz, 1 H), 7,38 (m, 2 H), 6,98 (m, 1 H), 6,67 (m, 1 H), 6,64 (m, 1 H), 6,54 (m, 1 H), 6,29 (m, 1 H), 3,39 (Septett, J = 7,1 Hz, 1 H), 2,94 (m, 1 H), 1,68 (dd, $J_{H-P}$ = 18,1 Hz, J = 7,2 Hz, 3 H), 1,64 (dd, $J_{H-P}$ = 17,4, J = 7,2 Hz, 3 H), 1,45 (dd, $J_{H-P}$ = 15 Hz, J = 7,2 Hz, 3 H), 1,33 (dd, $J_{H-P}$ = 14,6 Hz, J = 7,3 Hz, 3 H). 31 P NMR (161,9 MHz, $CD_2Cl_2$) δ 23,1 (br, m); $^{11}B$ (80 MHz, $CD_2Cl_2$) δ - 14,8 (br d, J = 110 Hz).

**Beispiel 21** (Tributylstannyl-dimethylphosphino-inden, Verbindung 22)

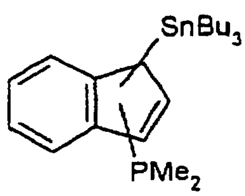

22

In einen Rundkolben, der 5,5 g (0,047 mol) Inden enthielt, wurden 150 ml Ether gegeben; es wurde auf -20°C abgekühlt. Zu dieser Lösung wurden 20,8 ml einer 2,3 molaren Lösung von Butyl-lithium in Hexan (0,048 mol) innerhalb 5 mm gegeben, wobei eine gelbe Lösung entstand. Nach Entfernung des Kältebades wurde die Losung auf Raumtemperatur erwärmt und 1 h nachgerührt Nach Abkühlung des Reaktionsgemisches auf - 30°C wurden 4,6 g Chlordimethylphosphin (0,048 mol) in 30 ml Ether innerhalb 20 min zugegeben, wobei ein Niederschlag entstand. Nach 2-stündigem Rühren bei - 20°C wurden 20,8 ml einer 2,3 molaren Lösung von Butyl-lithium in Hexan (0,048 mol) zugetropft. Nach vollstandiger Zugabe wurde das Kältebad entfernt, die Lösung langsam auf Raumtemperatur erwarmt und 1,5 h nachgeruhrt. Nach Abkühlung der Aufschlämmung auf 0°C wurden 15,6 g Chlortributylzinn (0,048 mol) zugetropft. Die entstehende Aufschlämmung wurde auf Raumtemperatur erwärmt und 1,5 h gerührt Der Ether wurde i. Vak. entfernt und das Rohprodukt erneut in Hexan aufgelöst, abfiltriert und das Filtrat i. Vak. getrocknet, wobei 17,4 g der Verbindung 22 (Ausbeute 78 %) als schweres gelbes Öl übrigblieben. $^{1}H$ NMR (400 MHz, $CD_2Cl_2$) δ 7,67 (d, J = 7,5 Hz, 1 H), 7,47 (d, J = 7,4 Hz, 1 H), 7,18 (m, 2 H), 6,83 (m, 1 H), 4,28 (s mit Sn-Satelliten, 1 H), 1,43 - 0,78 (m, 33 H). $^{31}P$ NMR (161,9 MHz, $CD_2Cl_2$) δ - 61,6 ppm.

**Beispiel 22** (Dimethylphosphino-indenyl-zirconiumtrichlorid, Verbindung 23)

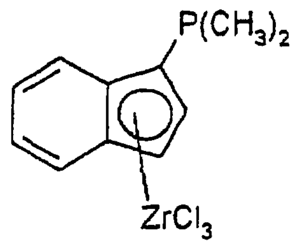

23

Zu einer Aufschlämmung von 8,5 g (0,036 mol) 99,9 %igem $ZrCl_4$ in 200 ml Toluol wurde eine Lösung von 17,0 g der Verbindung 22 (0,037 mol) in 50 ml Toluol bei - 78°C gegeben. Nach vollständiger Zugabe wurde das Reaktionsgemisch 0,5 h bei - 30°C und danach 4 h bei 0°C gerührt. Der entstehende gelbe Niederschlag wurde abfiltriert und mit Toluol und Hexan gewaschen. Die Feststoffe wurden in Vak. getrocknet, wobei 8,3 g der Verbindung 23 (Ausbeute. 61 %) als freifließendes gelbes Pulver übrigblieb Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weiterbereinigt, wobei 7,2 g (Ausbeute: 53 %) des Produktes übrigblieben. Wegen der Unlöslichkeit dieser Verbindung wurde kein $^{1}H$ NMR erhalten.

**Beispiel 23** (Dimethylphosphino-dichlorboranyl-verbrücktes Indenyl-cyclopentadienyl-zirconiumdichlorid, Verbindung 24)

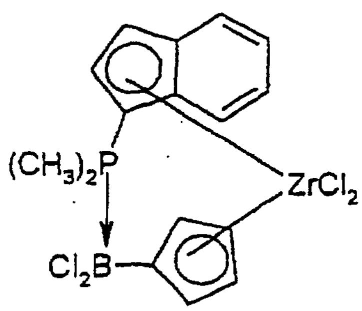

24

In ein Schlenk-Rohr wurden 30 ml Toluol und 0,55 g der Verbindung 23 (0,0015 mol) gegeben. Zu dieser Aufschlämmung wurden 0,31 g (0,0014 mol) der Verbindung 2 innerhalb 5 min gegeben. Die gelbe Aufschlämmung wurde 6,5 h bei Raumtemperatur gerührt, wobei eine leicht trübe Lösung verblieb. Der Niederschlag wurde durch Filtration entfernt, wobei eine heligelbe Toluollösung übrigblieb Nach Entfernung des Toluols i Vak. verblieb das Produkt als weißlicher Feststoff. Nachdem das Produkt mit Hexan gewaschen und i. Vak. getrocknet wurde, blieb die Verbindung 24 als blaßweißer Feststoff (0,54 g; Ausbeute: 76%) übrig. $^{1}H$ NMR (400 MHz, $CD_2Cl_2$) $\delta$ 7,84 (pseudo dd, J = 7,4 Hz 1,0 Hz, 1 H), 7,60 (m, 2 H), 7,51 (m, 1 H), 7,38 (m, 1 H), 6,93 (m, 1 H), 6,71 (m, 1 H), 6,66 (m, 1 H), 6,49 (m, 1 H), 6,30 (br s, 1 H), 2,11 (d $J_{H-P}$ = 11,9 Hz, 3 H), 1,94 (d, $J_{H-P}$ = 11,9 Hz, 3 H). $^{31}P$ NMR (161, 9 MHz, $CD_2Cl_2$) $\delta$ -5,9 (br, m); $^{11}B$ (80 MHz, $CD_2Cl_2$) $\delta$-14,6 (br d, $J_{B-P}$ = 126 Hz).

**Beispiel 24** (2-Methylinden, Verbindung 26)

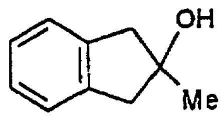

25

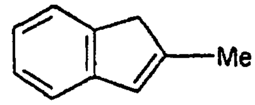

26

In einen Rundkolben wurden 38,7 g (0,29 mol) 2-Indanon und 300 ml Ether gegeben In einen zweiten Kolben wurden 96,7 ml einer 3,0 molaren Lösung von $CH_3MgI$ in Ether (0,29 mol), die mit 150 ml Ether verdünnt war, gegeben. Danach wurde die 2-Indanon-Lösung zu der $CH_3MgI$-Lösung über eine Kanule in einer solchen Menge gegeben, daß der Rückfluß aufrechterhalten wurde, wobei ein Niederschlag entstand. Nach vollständiger Zugabe wurde die Aufschlämmung weitere 4 h unter Rückfluß geführt und auf 0°C abgekühlt, wonach 100 ml einer gesättigten Lösung von $NH_4Cl$ langsam zugegeben wurden Das Produkt wurde mit Ether extrahiert und über $MgSO_4$ getrocknet. Nach Entfernung des Lösungsmittels i. Vak. wurden 30,1 g (Ausbeute: 70 %) 2-Methyl-2-indanol (Verbindung 25) als öliger Feststoff erhalten. $^1H$ NMR (400 MHz, $CDCl_3$) δ 7,15 (br m, 4 H), 3,01 (s, 2 H), 2,99 (s, 2 H), 1,5 (s, 3 H); OH variabel.

In einen Rundkolben mit einem Dean-Stark-Auffanggefäß wurden 25,5 g (0,17 mol) der Verbindung 25, 3,2 g (0,017 mol) *p*-Toluolsulfonsäure und 500 ml Hexan gegeben. Diese Aufschlämmung wurde 3 h unter Rückfluß gehalten Nach Abkühlung wurde die Hexanfraktion von den unlöslichen Produkten dekantiert und das Lösungsmittel i. Vak. entfernt, wobei ein Öl übrigblieb, das anschließend in einer kurzen Destillationskolonne bei 45°C und 0,03 mbar destilliert wurde, wodurch 15 g (Ausbeute: 68 %) der Verbindung 26 erhalten wurden. $^1H$ NMR (400 MHz, $CDCl_3$) δ 7,33 (d, J = 7,6 Hz, 1 H), 7,21 (m, 2 H), 7,06 (pseudo d t, J = 7,2, 1,4 Hz, 1 H), 6,45 (br s, 1 H), 3,25 (s, 2 H), 2,12 (s, 3 H).

Es wird verwiesen auf:


1 Morrison, H.; Giacherio, D. *J. Org. Chem.* **1982**, *47*, 1058.
2. Ready, T. E.; Chien, J. C. W.; Rausch, M. D. *J. Organom. Chem. 519*, **1996**, 21.
3. Wilt, Pawlikowki, Wieczorek *J. Org. Chem. 37,* **1972,** 824.


**Beispiel 25** (Tributylstannyl-diisopropylphosphino-2-methylinden, Verbindung 27)

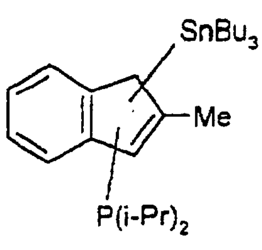

27

In einen Rundkolben, der 5,08 g (0,039 mol) 2-Methylinden 26 enthielt, wurden 150 ml Ether gegeben; es wurde auf -20°C abgekühlt. Zu dieser Lösung wurden 17,0 ml einer 2,3-molaren Lösung von Butyl-lithium in Hexan (0.039 mol) innerhalb 5 min gegeben, wobei eine gelbe Lösung entstand. Nach Entfernung des Kältebades wurde die Lösung auf Raumtemperatur erwärmt und 1 h nachgerührt. Danach wurde das Reaktionsgemisch auf - 20°C gekühlt, und es wurden 5,8 g (0,039 mol) Chlordiisopropylphosphin innerhalb 5 min zugegeben. wobei ein Niederschlag entstand. Danach wurde das Kältebad entfernt und das Reaktionsgemisch 1 h bei Raumtemperatur gerührt. Nach Abkühlung auf - 20°C wurden 17,0 ml einer 2,3 molaren Lösung von Butyl-lithium in Hexan (0.039 mol) zugetropft. Nach vollständiger Zugabe wurde das Kältebad entfernt, die Lösung iängsam auf Raumtemperatur erwärmt und 1,5 h nachgerührt. Nach Abkühlung der Aufschlämmung auf 0°C, wurden 12,4 g (0,038 mol) Chorotributylzinn zugetropft. Die entstehende Aufschlämmung wurde auf Raumtemperatur erwärmt und 1,5 h gerührt. Der Ether wurde i. Vak. entfernt

und das Rohprodukt erneut in Hexan aufgelöst, abfiltriert und das Filtrat i. Vak. getrocknet, wobei 20 4 g (Ausbeute: 98 %) der Verbindung 27 als schweres gelbes Öl übrigblieben. Zwei Isomere wurden durch $^{31}P$ NMR identifiziert. $^{31}P$ NMR (161,9 MHz. $CD_2Cl_2$) δ - 5,9 und -6,6 in einem Verhältnis von 2:1.

**Beispiel 26** (Diisopropylphosphino-2-methylindenyl-zirkonium-trichlorid, Verbindung 28)

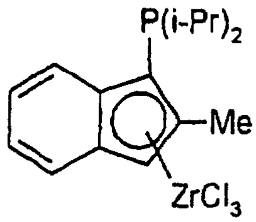

28

Eine Lösung von 17.7 g (0,033 mol) der Verbindung 27 in 100 ml Methylenchlorid wurde zu einer Aufschlämmung von 7,7 g (0,033 mol) 99,9 %igem $ZrCl_4$ in 200 ml Methylenchlorid innerhalb 10 min bei - 25°C gegeben Nach vollstandiger Zugabe wurde das Reaktionsgemisch langsam auf 10°C über einen Zeitraum von 3 h erwarmt, wonach eine klare, orangefarbene Lösung entstand. Nach 1 h bei Raumtemperatur wurde das Lösungsmittel i. Vak. entfernt und das enstehende Öl mit 2 x 50 ml Hexan gewaschen, wodurch ein öliges Rohprodukt (28) erhalten wurde, das direkt zur Herstellung der Verbindung 29 verwendet wurde. Wegen der Unlöslichkeit dieser Verbindung wurde kein $^{1}H$ NMR erhalten.

**Beispiel 27** (Diisopropylphosphino-dichlorboranyl-verbrücktes 2-Methylindenylcyclopentadienyl-zirkonium-dichlorid, Verbindung 29)

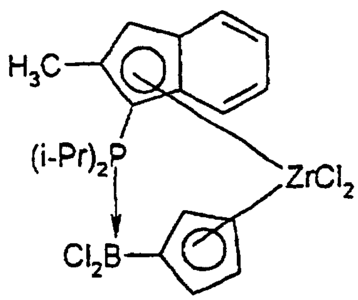

29

In einen Rundkolben, der 0,025 mol der unreinen Verbindung 28 in 200 ml Toiuol bei 0°C enthielt, wurden 5,5 g (0,025 mol) der Verbindung 2 über einen Zeitraum von 5 min gegeben. Nach 1 h bei 0°C wurde das Rühren beendet und die lösliche Toluolfraktion vom entstandenem Öl dekantiert, Nach Entfernung des Toluols i. Vak. wurden 100 ml Hexan zu dem öligen Feststoff gegeben, wobei 7,4 g (Ausbeute: 54%) eines gelben Pulvers mit einer Reinheit von ca. 90 % entstanden. Das Produkt wurde in einem Soxhlet-Extraktionsgerät mit unter Rückfluß geführtem Pentan weitergereinigt. Das Endprodukt bestand aus einem hellgelben Pulver. $^{1}H$ NMR (400 MHz, $CD_2Cl_2$) δ 8,67 (br d, J = 7,6 Hz, 1 H), 7,71 (m, 1 H), 7,35 (m, 2 H), 6,62 (br s, 1 H), 6,54 (br s, 1 H), 6, 47 (m, 1 H), 6,33 (m, 1 H), 6,06 (br s, 1 H), 3,3 (br m, 1 H), 3,2 (br m, 1 H), 2,6 (s, 3 H), 1,78 (dd, J = 7,1 Hz, $J_{H-P}$ = 15,3 Hz, 3 H), 1,70 (dd, J = 7,2 Hz, $J_{H-P}$ = 15,7 Hz, 3 H). 1,57 (dd, J = 7,1 Hz, $J_{H-P}$ = 15,3 Hz, 3H), 1,12 (dd, J = 7,1 Hz, $J_{H-P}$ = 14,0 Hz, 3H). $^{31}P$ NMR (161,9 MHz, $CD_2Cl_2$) δ 28,4 (br m); $^{11}B$ (80 MHz, $CD_2Cl_2$) δ - 14,3 (br d, $J_{P-B}$ = 106 Hz).

**Beispiel 28** (Bistrimethylsilyl-(diphenylphosphino)-cyclopentadien, Verbindung 30)

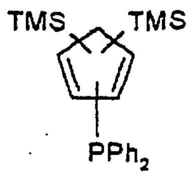

TMS = -Si$(CH_3)_3$

30

76,6 ml einer 2,5-molaren Lösung von Butyl-lithium in Hexan (0,19 mol) wurden zu einer Lösung der Verbindung 1 (40,2 g; 0,19 mol) in 500 ml Ether innerhalb 10 min bei 0°C gegeben. Nach vollständiger Zugabe wurde das Bad entfernt und die Lösung 1 h bei Raumtemperatur gerührt Nach Abkühlung auf 0°C, wurden 42,2 g (0,19 mol) Chlordiphenylphosphin innerhalb 10 min zugegeben, wonach das Bad entfernt und die Aufschlämmung auf Raumtemperatur erwärmt wurde. Nach 1-stündigem Rühren bei Raumtemperatur wurde der Ether i. Vak. entfernt und das Produkt in Hexan erneut aufgelöst. Nach Abfiltrieren der Salze wurde das Hexan i. Vak. entfernt, wobei 69,1 g (Ausbeute: 91 %) der Verbindung 30 als Öl übrigblieben. $^1$H NMR (400 MHz, $CDCl_3$) δ 7,45 (m, 4H), 7,35 (m, 6 H), 6,8 (m, 1 H), 6,65 (m, 1 H), 6,6 (m, 1H), 0 (s, 18 H). $^{31}$P NMR (161,9 MHz, $CDCl_3$) δ: - 19,5 ppm.

**Beispiel 29** (Trimethylsilyl-diphenylphosphino-cyclopentadienyl-zirkoniumtrichlorid, Verbindung 31)

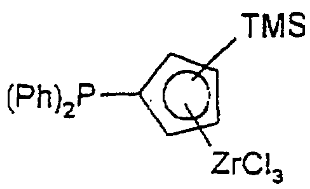

31

Eine Lösung der Verbindung 30 (69,1 g, 0,175 mol) in 200 ml Methylenchlorid wurde über eine Kanüle zu einer Suspension von 41,5 g (0,178 mol) 99,9 %igem $ZrCl_4$ in 200 ml Methylenchlorid gegeben und 8 h bei Raumtemperatur gerührt Während dieser Zeit trübte sich die Lösung. Die Feststoffe wurden abfiltriert, mit 2 x 20 ml Toluol und anschließend 2 x 20 ml Hexan gewaschen und i. Vak getrocknet. Das Produkt bestand aus 35 g (Ausbeute: 39 %) eines hellgelben Pulvers. Wegen der Unlöslichkeit des Produktes wurde kein $^1$H NMR erhalten.

**Beispiel 30** (Diphenylphosphino-dichlorboranyl-verbrücktes Trimethylsilylcyclopentadienyl-cyclopentadienyl-zirkonium-dichlorid, Verbindung 32)

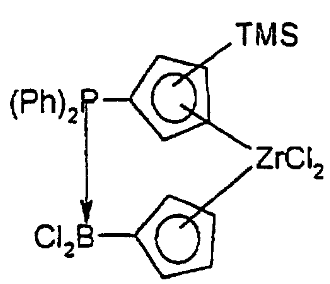

32

Eine Lösung der Verbindung 2 (2,6 g, 0,012 mol) wurde bei 0°C zu einer Aufschlämmung der Verbindung 31

(5,6 g, 0,011 mol) in 100 ml Toluol gegeben Nach 5-stündigem Rühren bei 0°C wurde der gelbbraune Feststoff durch Filtration entfernt, wobei eine weißliche Lösung übrigblieb Nach Entfernung des Toluols i Vak und Waschen des übriggebliebenen Feststoffes mit Pentan, verblieb die Verbindung 32 als hochluftempfindliches weißliches Pulver (5,5 g, Ausbeute. 81 %) $^1H$ NMR (400 MHz, $CD_2Cl_2$) δ: 7,8 - 7,5 (m, 10 H), 7,06 (m, 1 H), 6,92 (m, 1 H), 6,83 (m, 1 H), 6,75 (m, 2 H), 6,68 (m, 1 H), 6,63 (m, 1 H), 0,26 (s, 9 H). $^{31}P$ NMR (161,9 MHz, $CD_2Cl_2$) δ 0 (br, m); $^{11}B$ (80 MHz, $CD_2Cl_2$) δ - 16,3 (br d, $J_{B-P}$ = 82 Hz).

**Beispiel 31** (Diisopropylphosphino-cyclopentadienyl-lithium, Verbindung 33)

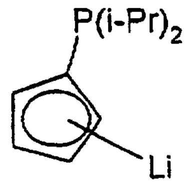

33

In einen Rundkolben, der 1,68 g (0,023 mol) Cyclopentadienyl-lithium enthielt, wurden 50 ml Ether gegeben Nach Abkühlung des Reaktionskolbens auf - 20°C wurden 3,6 g (0,023 mol) Chlordiisopropylphosphin zugetropft. Nach vollständiger Zugabe wurde das Kältebad auf 0°C erwärmt und das Reaktionsgemisch 1 h gerührt. Danach wurde Ether i. Vak. entfernt und das Produkt in Toluol gelöst und abfiltriert. Nach Durchspülen der Fritte mit 2 x 10 ml Toluol wurde das Reaktionsgemisch auf - 20°C abgekühlt und 9,3 ml einer 2,5 molaren Lösung von Butyllithium in Hexan (0,023 mol) zugegeben, wobei eine orangefarbene Losung entstand. Eine kleine Fraktion wurde für NMR-Untersuchungen entnommen und nach Abtrennung des Toluols i Vak. und Waschen des entstehenden Öls mit Hexan ein hellgelber Feststoff (33) erhalten. $^1H$ NMR (400 MHz, THF) δ: 5,89 (m, 2 H), 5,83 (br s, 2 H), 1,86 (m, 2 H), 1,0 - 0,8 (m, 12 H) Die Hauptmenge wurde direkt zur Herstellung der Verbindung 34 verwendet.

**Beispiel 32** (Diisopropylphosphino-dimethylboranyl-verbrücktes Bis-cyclopentadienyl-titandichlorid, Verbindung 34)

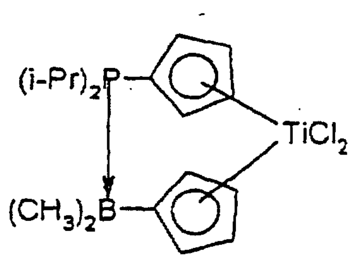

34

Eine Lösung von 6,1 g (0,023 mol) der Verbindung 4 in 50 ml Toluol wurde zu einer Toluollösung der Verbindung 33 (0,023 mol) aus der obengenannten Reaktion bei - 78°C gegeben. Nach 30-minütigem Rühren bei - 78°C wurde das Kältebad entfernt und die Lösung 2 h bei Raumtemperatur nachgerührt. Danach wurden die Feststoffe durch Filtration und das Toluol i. Vak. entfernt. Anschließend wurde Hexan zu dem roten öligen Produkt gegeben, wobei ein rotes Pulver entstand, das abfiltriert, mit 2 x 20 ml Hexan gewaschen und i Vak getrocknet wurde, wodurch die Verbindung 34 als rotes Pulver (5,95 g, Ausbeute, bezogen auf CpLi: 61%) entstand. $^1H$ NMR (400 MHz, $CD_2Cl_2$) δ: 6,96 (m, 2 H), 6,94 (pseudo t, J = 2,4 Hz, 2 H), 6,59 (m, 2 H), 6,42 (m, 2 H), 2,58 (m, 2 H), 1,44 (dd, J = 7,3 Hz, $J_{H-P}$ = 14,7 Hz, 6 H), 1,27 (dd, J = 7,2 Hz, $J_{H-P}$ = 13,1 Hz, 6 H), 0,31 (d, $J_{H-P}$ = 16,4 Hz, 6 H) $^{31}P$ NMR (161,9 MHz, $CD_2Cl_2$) δ 28,7 (br m), $^{11}B$ (80 MHz, $CD_2Cl_2$) δ -29,7 (br m).

**Beispiel 33** (Dimethylphosphino-tributylstannyl-2-methylinden, Verbindung 35)

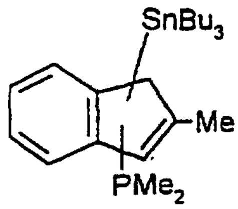

35

In einen Rundkolben, der 6,76 g (0,052 mol) 2-Methylinden (Verbindung 26) enthielt, wurden 100 ml Ether gegeben; es wurde und auf - 20°C gekühlt. Zu dieser Lösung wurden 21ml einer 2,5 molaren Lösung von Butyl-lithium in Hexan (0,052 mol) innerhalb 5 min gegeben, wobei eine gelbe Lösung entstand Nach Entfernung des Kältebades wurde die Lösung auf Raumtemperatur erwärmt und 1 Stunde nachgerührt. Nach Abkühlung des Reaktionsgemisches auf - 20°C wurden 5,0 g (0,052 mol) Chlordimethylphosphin innerhalb 5 min zugegeben, wobei ein Niederschlag entstand. Anschließend wurde das Kältebad entfernt und das Reaktionsgemisch 1 h bei Raumtemperatur gerührt. Nach Abkuhlung auf - 20°C wurden 21,0 ml einer 2,5 molaren Losung von Butyl-lithium in Hexan (0,052 mol) zugetropft Nach vollständiger Zugabe wurde das Kältebad entfernt, woraufhin die Lösung langsam auf Raumtemperatur erwärmt und 1,5 h gerührt wurde Nach Abkuhlung der Aufschlämmung auf 0°C wurden 16,9 g (0,052 mol) Chlortributylzinn zugetropft. Die entstehende Aufschlammung wurde auf Raumtemperatur erwarmt und 1,5 h gerührt. Nach Entfernung des Ethers i. Vak. wurde das Rohprodukt erneut in Hexan aufgelöst, abfiltriert und das Filtrat i Vak. getrocknet, wobei 24,3 g (Ausbeute: 98 %) der Verbindung 35 als schweres gelbes Öl übrigblieben. $^{31}P$ NMR (161,9 MHz, $CD_2Cl_2$) $\delta$ -68,5 (s).

**Beispiel 34** (Dimethylphosphino-2-methylindenyl-zirkonium-trichlorid, Verbindung 36)

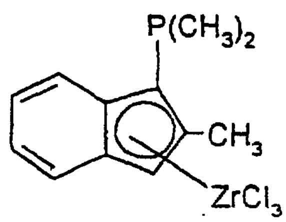

36

Eine Lösung von 17,4 g (0,036 mol) der Verbindung 35 in 100 ml Toluol wurde zu einer Aufschlämmung von 8,5 g (0,036 mol) 99,9 %igem $ZrCl_4$ in 100 ml Toluol innerhalb 10 min bei 0°C gegeben. Nach vollständiger Zugabe wurde das Reaktionsgemisch langsam auf 10°C über einen Zeitraum von 1 h erwärmt und danach 6 h bei Raumtemperatur gerührt. Anschließend wurde der gelbe Niederschlag abfiltriert, mit 2 x 20 ml Toluol und 2 x 20 ml Hexan gewaschen und i. Vak. getrocknet. Das Pulver wurde durch Entfernung der verbliebenen Zinnverbindungen mittels Extraktion mit unter Rückfluß geführtem Toluol über einen Zeitraum von 3 h bei 30 mm Hg und danach mit Pentan über einen Zeitraum von 2 h in einem Soxhlet-Extraktor weitergereinigt, wobei 5,8 g (Ausbeute: 41 %) der Verbindung 36 als leuchtend gelbes Pulver übrigblieben. Wegen der Unloslichkeit dieser Verbindung wurde kein $^1H$ NMR erhalten.

**Beispiel 35** (Dimethylphosphino-dichlorboranyl-verbrücktes 2-Methylindenylcyclopentadienyl-zirkonium-dichlorid, Verbindung 37)

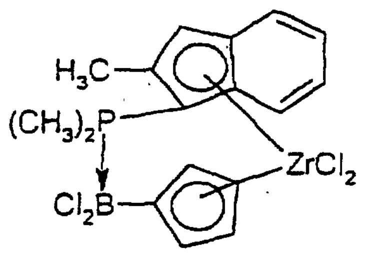

37

In einen Rundkolben, der 4,8 g (0,012 mol) der Verbindung 36 in 125 ml Toluol bei Raumtemperatur enthielt, wurden 2,7 g (0,012 mol) der Verbindung 2 innerhalb 5 min gegeben. Nach 7-stündigem Rühren wurde der dunkelgelbe Feststoff filtriert, mit 2 x 20 ml Hexan gewaschen und i. Vak. getrocknet, wobei 5,5 g (Ausbeute: 89%) der Verbindung 37 als hellgelber Feststoff erhalten wurden. $^1$H NMR (400 MHz, $CD_2Cl_2$) δ 8,39 (d, J = 8,5 Hz, 1 H), 7,71 (m, 1 H), 7.4 (m, 2 H), 6,64 (m, 2 H), 6,46 (pseudo q, J = 5,3, 2,9 Hz, 1 H), 6,37 (m, 1 H), 6,08 (m, 1 H), 2,51 (s, 3 H), 2,1 (d, $J_{H-P}$ = 12 Hz, 3 H), 2,0 (d, $J_{H-P}$ = 12 Hz, 3 H); $^{31}$P NMR (161,9 MHz, $CD_2Cl_2$) δ 5,3 (br m); $^{11}$B (80 MHz, $CD_2Cl_2$) δ -16,5 (br d, $J_{B-P}$ = 116 Hz)

**Beispiel 36** (Dicyclohexylboranylcyclopentadienyl-lithium, Verbindug 39)

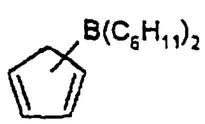

38

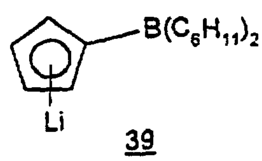

39

Verwiesen wird auf: Herberich, G. E.; Fischer, A. *Organometallics* **1996,** *15, 58.*

40 ml einer 1-molaren Lösung von Chlordicyclohexylboran in Hexan (0,04 mol) wurden zu 20 ml Cyclopentadienyl-Natrium (2 M in THF; 0,04 mol) in 100 ml Hexan bei - 78°C gegeben. Nach Entfernung des Kältebades wurde das Reaktionsgemisch auf Raumtemperatur erwärmt und 1 h gerührt. Nach Filtration und Entfernung des Lösungsmittels i. Vak. blieben 9,1 g (Ausbeute. 94%) der Verbindung 38 als gelbes Öl übrig, das direkt bei der Synthese der Verbindung 39 verwendet wurde.

In einen Rundkolben, der 40 ml THF enthielt, wurden 5,3 g (0,038 mol) 2,2,6,6-Tetramethylpiperidin gegeben. Nach Abkühlung auf - 20°C und Zugabe von 15 ml einer 2,5 molaren Lösung von Butyl-lithium in Hexan (0,038 mol) wurde die Mischung 1 h bei - 20°C gerührt und danach auf - 78°C abgekühlt Zu dieser Lösung wurden 9,1 g (0,038 mol) der Verbindung 38 in 20 ml Hexan innerhalb 10 Minuten gegeben Das Kältebad wurde entfernt und die Lösung 1 h bei Raumtemperatur gerührt. Nach Entfernung des Lösungsmittels i. Vak. und Zugabe von Hexan wurde 2 h nachgerührt, wobei eine weiße Suspension entstand, die filtriert und i. Vak. getrocknet wurde. Es enstand 4,6 g (Ausbeute: 50%) der Verbindung 39 als weißes Pulver. $^{11}$B (80 MHz, THF) δ 43,9

**Beispiel 37** (Diphenylphosphino-dicyclohexylboranyl-verbrücktes Trimethylsilyl-cyclopentadienyl-cyclopentadienyl-zirkonium-dichlorid, Verbindung 40)

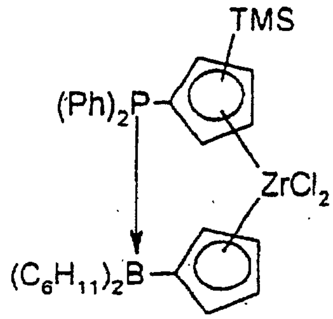

40

Nach Abkühlung eines Schlenk-Kolbens, der 1,4 g (0,0056 mol) der Verbindung 39 und 2,9 g (0,0056 mol) der Verbindung 31 enthielt, auf - 20°C wurden 100 ml Toluol zugegeben. Nach Entfernung des Bades wurde die Aufschlämmung 6 h bei Raumtemperatur geruhrt und anschließend filtriert. Das Lösungsmittel wurde i Vak. entfernt, wobei ein öliger Feststoff übrigblieb, der mit Hexan gewaschen und filtriert wurde. Nach Trocknung des Feststoffes i Vak. verblieben 1,9 g (Ausbeute. 48%) der Verbindung 40 als rosafarbener Feststoff $^{1}H$ NMR (400 MHz, $CD_2Cl_2$) δ 7,6 - 7,2 (br m, 10 H), 7,04 (br s, 1 H), 6,95 (m, 1 H), 6,82 (m, 1 H), 6,76 (br s, 1 H), 6,66 (m, 1 H), 6,63 (m, 1 H), 6,52 (m, 1 H), 1,6 - 1,1 (br m, 22 H), 0,26 (s, 9 H), $^{31}P$ NMR (161,9 MHz, $CD_2Cl_2$) δ 16,3; $^{11}B$ (80 MHz, $CD_2Cl_2$) δ -13,8

**Beispiel 38** (4,7-Dimethylinden, Verbindung 41)

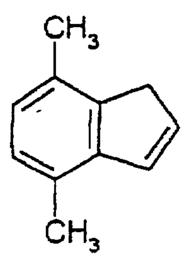

41

Verwiesen wird auf: Erker, G. et al. *Tetrahedron* **1995**, *51*, 4347.

Eine 30 %ige Lösung von 153 g (2,8 mol) Natriummethoxid in Methanol wurde mit 60 ml Methanol verdünnt und auf 0°C abgekühlt. Zu dieser Lösung wurden 34 g (0,52 mol) Cyclopentadien gegeben. Nach 15 min wurden 39 g (0.34 mol) 2,5-Hexandion zugetropft, wonach das Kältebad entfernt und das Reaktionsgemisch 2 h bei Raumtemperatur gerührt wurde. Anschließend wurden 200 ml Wasser und 200 ml Ether zugegeben. Die Etherschicht wurde entfernt, mit Wasser und Kochsalzlösung gewaschen und anschließend über $Na_2SO_4$ getrocknet Nach Entfernung des Lösungsmittels i. Vak. und Destillation bei 65°C und 0,1 mbar verblieb die Verbindung 41 als orangefarbenes Öl (40 g; Ausbeute: 81 %). $^{1}H$ NMR (400 MHz, $CDCl_3$) δ 7,35 - 7,27 (m, 2 H), 7,23 (d, J = 7,6 Hz, 1 H), 6,82 (m, 1 H), 3,51 (s, 2 H), 2,75 (s, 3H), 2,63 (s, 3 H).

**Beispiel 39** (Diisopropylphosphino-tributylstannyl-4,7-dimethylinden, Verbindung 42)

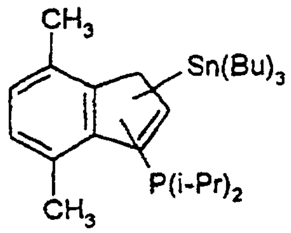

42

In einen Rundkolben, der 5,0 g (0,035 mol) 4,7-Dimethylinden (Verbindung 41) enthielt, wurden 100 ml Ether gegeben; es wurde auf - 20°C abgekühlt. Zu dieser Lösung wurden 14 ml einer 2,5 molaren Lösung von Butyl-lithium in Hexan (0,035 mol) innerhalb 5 min gegeben, wobei eine gelbe Lösung entstand. Nach Entfernung des Kältebades wurde die Losung auf Raumtemperatur erwarmt und 1 h nachgeruhrt. Nach Abkühlung des Reaktionsgemisches auf - 20°C wurden 5,3 g (0,035 mol) Chlordiisopropylphosphin innerhalb 5 min zugegeben, wobei ein Niederschlag entstand. Danach wurde das Kältebad entfernt und das Reaktionsgemisch 1 h bei Raumtemperatur gerührt. Nach Abkühlung auf - 20°C wurden 14,0 ml einer 2,5 molaren Lösung von Butyl-lithium in Hexan (0,035 mol) zugetropft. Nach vollständiger Zugabe wurde das Kältebad entfernt, die Lösung langsam auf Raumtemperatur erwärmt und 1,5 h gerührt. Nach Abkühlung der Aufschlämmung auf 0°C wurden 11,4 g Chortributylzinn (0,035 mol) zugetropft Die entstehende Aufschlämmung wurde auf Raumtemperatur erwärmt und 1,5 h gerührt. Der Ether wurde i. Vak. entfernt und das Rohprodukt erneut in Hexan aufgelöst, filtriert und das Filtrat i. Vak. eingeengt, wobei 16 g (Ausbeute: 83%) der Verbindung 42 als schweres gelbes Öl übrigblieben $^{31}P$ NMR (161,9 MHz, $CD_2Cl_2$) δ - 9 ppm.

**Beispiel 40** (Diisopropylphosphino-4,7-dimethylindenyl-zirkonium-trichlorid, Verbindung 43)

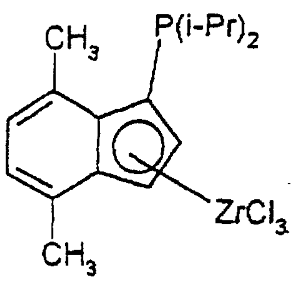

43

Eine Lösung von 16,0 g (0,029 mol) der Verbindung 42 in $CH_2Cl_2$ (100 ml) wurde zu einer Aufschlämmung von 6,4 g (0,029 mol) 99,9 %igem $ZrCl_4$ in 100 ml $CH_2Cl_2$ bei - 20°C innerhalb 10 min gegeben. Nach vollständiger Zugabe wurde das Reaktionsgemisch langsam über einen Zeitraum von zwei Stunden auf Raumtemperatur erwärmt und anschließend weitere 2 h bei Raumtemperatur gerührt. Danach wurden die Feststoffe durch Filtration entfernt und das Lösungsmittel i. Vak. entfernt, wobei die Rohverbindung 43 als Öl übrigblieb, das direkt zur Herstellung der Verbindung 44 verwendet wurde.

**Beispiel 41** (Diisopropylphosphino-dichlorboranyl-verbrucktes 4,7-Dimethylindenyl-cyclopentadienyl-zirkonium-dichlorid, Verbindung 44)

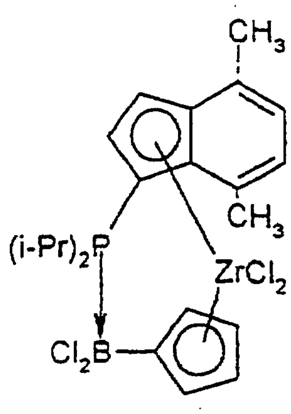

44

In einen Rundkolben, der 10,6 g (0,023 mol) der Verbindung 43 in 125 ml Toluol bei 0°C enthielt, wurden 5,0 g (0,023 mol) der Verbindung 2 innerhalb 5 min gegeben. Nach 1,5-stündigem Rühren bei 0°C wurde das Kältebad entfernt und die Aufschlammung weitere 3 Stunden bei Raumtemperatur gerührt Danach wurde die toluollösliche Fraktion vom schweren Öl, das sich während der Reaktion gebildet hatte, dekantiert und i. Vak. zur Trockne eingeengt, wobei ein schweres Öl übrigblieb. Nach Zugabe von 100 ml Hexan zu diesem Öl wurde nachgerührt und ein dunkelgelbes Pulver abfiltriert, das i. Vak. getrocknet wurde. Nach diesem Verfahren verblieben 6,3 g (Ausbeute: 48 %) der Verbindung 44 als dunkelgelbes Pulver. Das Produkt kann durch Ausfallung einer $CH_2Cl_2$-Lösung der Verbindung 44 in einem Kohlenwasserstoff-Lösungsmittel weitergereinigt werden. $^1$H NMR (400 MHz, $CD_2Cl_2$) δ 8,03 (pseudo t, J = 8,5 Hz, 1 H), 7,22 (d, J = 7 Hz, 1 H), 7,08 (d, J = 7,1 Hz, 1 H), 7,02 (m, 1 H), 6,77 (m, 1 H), 6,70 (m, 1 H), 6,58 (m, 1 H), 6,44 (br s, 1 H), 3,51 (m, 1 H), 2,82 (m, 1 H), 2,64 (s, 3 H), 2,50 (s, 3 H), 1,77 (dd, J = 7,2 Hz, $J_{H-P}$ = 16,3 Hz, 3 H), 1,69 (dd, J = 7,1 Hz, $J_{H-P}$ = 15,2 Hz, 3 H), 1,58 (dd, J = 7,1 Hz, $J_{H-P}$ = 15,5 Hz, 3 H), 1,28 dd, J = 7,2 Hz, $J_{H-P}$ = 14,5 Hz, 3 H); $^{31}$P NMR (161,9 MHz, $CD_2Cl_2$) δ 28,4 (br, m), $^{11}$B (80 MHz, $CD_2Cl_2$) δ -15,3 (d, $J_{P-B}$ = 107 Hz).

**Beispiel 42** (Ethylen-Polymerisation)

In einem im Vakuum ausgeheizten, trockenen, $O_2$-freien, magnetisch gerührten V4A-Stahlautoklaven wurden 50 ml trockenes sauerstofffreies Toluol eingesaugt Der D/A-Metallocen-Katalysator (Verbindung 10) wurde in Toluol bei Raumtemperatur mit MAO (Methylaluminoxan, 10 %ig in Toluol, Molmasse 900 g/mol) im Atom(Mol)-Verhältnis Al/Zr = 66.666 : 1 in 15 Minuten praformiert. Ein Aliquot, welches 1,5 x $10^{-7}$ mol Zr und 1,0 x $10^{-2}$ mol Al in 6,8 ml enthielt, wurde unter strengem Luftausschluß in den Autoklaven injiziert und mit weiteren 50 ml Toluol nachgespült Anschließend wurde unter einem konstanten Ethylendruck von 10 bar 1 Stunde bei Raumtemperatur polymerisiert, wobei die Innentemperatur auf 42°C anstieg. Nach Entspannen des Autoklaven wurde die Reaktionsmischung in 500 ml Ethanol und 50 ml konzentrierter wäßriger Salzsäure gegeben und über Nacht gerührt, das Polymerisat abfiltriert, mit Ethanol gründlich gewaschen und bei 100°C im Umluft-Trockenschrank bis zur Gewichtskonstanz getrocknet. Die PE-Ausbeute betrug 2,9 g, was einer Katalysator-Aktivität von 19,3 Tonnen Polymer pro Mol Zr und Stunde entspricht. Die Grenzviskosität η, gemessen in o-Dichlorbenzol bei 140°C, betrug 4,36 dl/g. Die DSC-Messung ergab eine Schmelztemperatur von 139°C und eine Schmelzwärme von 164 J/g.

**Beispiel 43** (Ethylen-Propylen-Copolymerisation)

In einem im Vakuum bei 100°C ausgeheizten, trockenen, sauerstofffreien, gerührten V4A-Stahlautoklaven wurden 50 ml trockenes sauerstofffreies Toluol eingesaugt. Der D/A-Metallocen-Katalysator (Verbindung 10) wurde in Toluol bei Raumtemperatur mit MAO (Methylaluminoxan, 10 %ig in Toluol, Molmasse 900 g/mol) im Atom(Mol)-Verhältnis Al/Zr = 50.000 : 1 während 15 Minuten präformiert Ein Aliquot, welches 4 x $10^{-7}$ mol Zr und 2 x $10^{-2}$ mol Al in 14,7 ml enthielt, wurde unter strengem Luftausschluß in den Autoklaven injiziert und mit weiteren 50 ml Toluol nachgespült. Anschließend wurden 4,3 g Propylen aufgedruckt und der Autoklavendruck mit Ethylen konstant auf 10 bar eingestellt und unter Rühren 1 Stunde bei 25°C polymerisiert. Nach Entspannen des Autoklaven wurde die hochviskose Reaktionsmischung in eine Mischung von 500 ml Ethanol und 50 ml konzentrierter wäßriger Salzsäure (37 %ig) eingeruhrt

Die Suspension des hierbei ausgefallenen weißen Polymers wurde noch 14 Stunden gerührt, anschließend der Feststoff durch Filtration isoliert, mit Ethanol gründlich gewaschen und bis zur Gewichtskonstanz bei 100°C getrocknet. Die EPM-Ausbeute betrug 3,4 g, was einer Katalysator-Aktivität von 8,5 Tonnen Copolymer pro Mol Zirkon und Stunde entspricht. IR-spektroskopisch wurde ein Propylengehalt von 40 Gew.-% ermittelt. Die Grenzviskosität η, gemessen in o-Dichlorbenzol bei 140°C, betrug 1,81 dl/g. Die DSC-Messung ergab eine Glasübergangs-Temperatur Tg = -38°C und eine Einfriertemperatur von -54°C.

**Beispiel 44** (Ethylen-Propylen-Copolymerisation)

In einem anderen Copolymerisationsversuch wurde wie im vorstehenden Beispiel 43 verfahren. Die Polymerisationstemperatur betrug jedoch 70°C. Die D/A-Zirkonocenmenge (Verbindung 10) betrug 4 x $10^{-7}$ mol bei einer Al-Menge von 1 x $10^{-2}$ mol. Das Al/Zr-Atom(Mol)-Verhältnis betrug 25.000:1. Die Polymerausbeute betrug 5,8 g, entsprechend einer Katalysatoraktivität von 14,5 Tonnen pro Mol Zirkon und Stunde. Die Grenzviskosität η, gemessen in o-Dichlorbenzol bei 140°C, betrug 1,10 dl/g. Der EP-Kautschuk hatte nach DSC-Messung eine Einfriertemperatur von -64°C und eine Glastemperatur Tg = -60°C.

**Beispiele 45 bis 48** (Ethylen-Polymerisation)

In anderen Ethylen-Polymerisationsversuchen wurde wie in Beispiel 42 verfahren, jedoch wurde das D/A-Metallocen 7 als Katalysator verwendet und verschiedene MAO-Mengen eingesetzt. Die Ti-Menge betrug 1 x $10^{-6}$ mol, der Autoklav wurde auf ca. 100°C erwärmt. Das Al/Zr-Verhältnis wurde zwischen 1.250, 2.500, 5.000, 10.000 variiert. In allen 4 Versuchen lag die Katalysator-Aktivität bei ca. 3 bis 4 t PE pro mol Ti und Stunde.

**Beispiele 49 bis 52** (Ethylen-Polymerisation)

Es wurde wie in Beispiel 48 verfahren. Die Ti-Menge (Verbindung 7) betrug 1 x $10^{-6}$ mol, das Al/Zr-Verhältnis war 10.000. Der Autoklav wurde auf verschiedene Temperaturen erhitzt und die Polymereigenschaften Grenzviskosität η und Schmelztemperatur $T_m$ ermittelt.

| | | | |
|---|---|---|---|
| T | RT bis 60° | η = 7,2 dl/g | $T_m$ = 143°C |
| T. | RT bis 80° | η = 4,6 dl/g | $T_m$ = 142°C |
| T: | RT bis 100° | η = 3,2 dl/g | $T_m$ = 144°C |
| T: | RT bis 120° | η= 2,2 dl/g | $T_m$ = 140°C |
| (RT = Raumtemperatur) | | | |

**Beispiel 53** (Ethylen-Polymerisation)

Der Versuch wurde entsprechend Beispiel 42 durchgeführt, jedoch war das als Katalysator eingesetzte D/A-Metallocen die Verbindung meso-15. Die Zr-Menge betrug 5 x $10^{-7}$ mol, die Al-Menge 1 x $10^{-2}$ mol. Der Autoklav wurde nach Katalysator- und Ethylen-Zugabe schnell auf ca. 120°C aufgeheizt Nach 30 . Minuten Polymerisationszeit wurden 4,3 g Polyethylen isoliert was einer Aktivität von ca. 17 t PE pro mol Zr und Stunde entspricht
Die Grenzviskositat η, gemessen bei 140°C in o-Dichlorbenzol, betrug 1,9 dl/g.

**Beispiel 54** (Ethylen-Polymerisation)

Es wurde entsprechend Beispiel 42 verfahren, wobei aber direkt 100 ml Toluol im Autoklaven vorgelegt wurden. Der Autoklav wurde auf 80°C erwarmt, der Katalysator injiziert und der Ethylendruck auf 10 bar eingestellt. Als Katalysator wurden 1 x $10^{-6}$ mol der Verbindung 18 in 2,4 mol Toluol, die mit 5 x $10^{-3}$ mol MAO in 3,3 mol Toluol präformiert worden war, verwendet. Die Innentemperatur stieg von 80°C auf 94°C. Nach 30 Minuten wurde die Polymerisation abgebrochen. Die PE-Ausbeute betrug 3,5 g, was einer Katalysator-Aktivität von ca. 7 Tonnen Polymer pro mol Katalysator und Stunde entspricht. Die Grenzviskosität η wurde in ortho-Dichlorbenzol bei 140°C gemessen; sie betrug 2,95 dl/g. Die DSC-Messung ergab eine Schmelztemperatur von 139°C und eine Schmelzwärme von 165 J/g.

**Beispiel 55** (Ethylen-Polymerisation)

Es wurde entsprechend Beispiel 54 verfahren, wobei aber die Innentemperatur auf 100°C eingestellt wurde. Als Katalysator wurden 5 x $10^{-7}$ mol der Verbindung 24 in 0,4 mol Chlorbenzol, die mit 5 x $10^{-3}$ mol MAO in 3,3 ml

Toluol präformiert worden war, eingesetzt. Die Innentemperatur stieg von 100°C auf 120°C Nach 30-minutiger Polymerisation hatten sich 6,2 g PE gebildet, was einer Katalysator-Aktivitat von ca 25 Tonnen Polymer pro mol Katalysator entspricht. Die Grenzviskosität η, gemessen in ortho-Dichlorbenzol bei 140°C, betrug 1.85 dl/g.

**<u>Beispiel 56</u>** (Ethylen-Polymerisation)

Es wurde entsprechend Beispiel 55 verfahren, wobei aber Verbindung <u>21</u> als Katalysator eingesetzt wurde. In diesem Fall stieg die Innentemperatur von 100°C auf 128°C. Die PE-Ausbeute betrug 7,9 g nach 30 Minuten, entsprechend einer Katalysator-Aktivität von ca. 31,6 Tonnen pro mol Katalysator und Stunde. Die Grenzviskosität η in ortho-Dichlorbenzol bei 140°C war 1,01 dl/g.

**<u>Beispiel 57</u>** (Ethylen-Polymerisation)

Es wurde entsprechend Beispiel 54 verfahren, wobei aber die Polymerisation bei 20°C gestartet wurde. Dabei diente Metallocen <u>32</u> als Katalysator. Hierzu wurden 2,5 x $10^{-7}$ mol Katalysator mit 2,5 x $10^{-3}$ mol MAO in Toluol präformiert. Die Innentemperatur stieg von 20°C auf 34°C. Nach 30-minütiger Polymerisation hatten sich 1,3 g PE gebildet, was einer Katalysator-Aktivität von ca. 10,4 Tonnen Polymer pro mol Katalysator und Stunde entspricht. Die Grenzviskositat η (ortho-Dichlorbenzol) betrug 5,3 dl/g. Die DSC-Messung ergab in der 1. Aufheizung mit einer Geschwindigkeit von 20 K/min eine Schmelztemperatur von 153°C. Nach Abschrecken der Probe mit 320 K/min wurde in der 2. Aufheizung das Schmelzmaximum bei 146°C ermittelt.

## Patentansprüche

**1.** Metallocen-Verbindungen der Formel

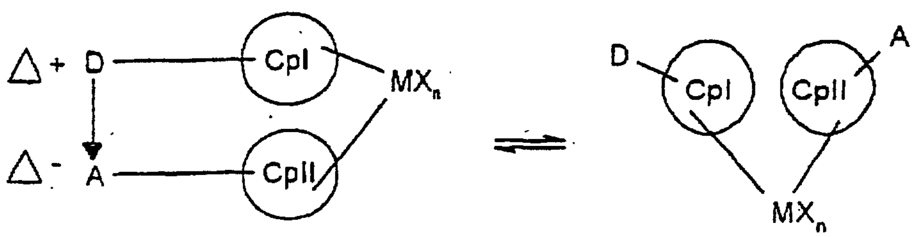

(Ia) (Ib) (I),

in der

CpI und CpII zwei gleiche oder verschiedene Carbanionen mit einer Cyclopentadienyl-haltigen Struktur darstellen, in denen eines bis alle H-Atome durch gleiche oder verschiedene Reste aus der Gruppe von linearem oder verzweigtem $C_1$-$C_{20}$-Alkyl das 1-fache bis vollständig durch Halogen, 1-3fach durch Phenyl, sowie 1-3fach durch Vinyl substituiert sein kann, $C_6$-$C_{12}$-Aryl, Halogenaryl mit 6 bis 12 C-Atomen, Organometall-Substituenten, wie Silyl, Trimethylsilyl, Ferrocenyl sowie 1- oder 2-fach durch D und A substituiert sein konnen,

D ein Donoratom bedeutet, das zusätzlich Substituenten tragen kann und das in seinem jeweiligen Bindungszustand mindestens über ein freies Elektronenpaar verfügt,

A ein Akzeptoratom bedeutet, das zusätzlich Substituenten tragen kann und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen,

M für ein Übergangsmetall der III., IV., V. oder VI. Nebengruppe des Periodensystems der Elemente (Mendelejew) einschließlich der Lanthaniden und Actiniden steht,

X ein Anionäquivalent bedeutet und

n in Abhängigkeit von der Ladung von M die Zahl Null, Eins, Zwei, Drei oder Vier bedeutet.

**2.** Verfahren zur Herstellung von Metallocen-Verbindungen der Formel

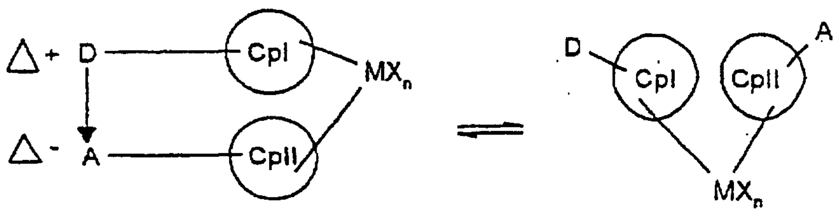

(Ia) (Ib),

in der

CpI und CpII zwei gleiche oder verschiedene Carbanionen mit einer Cyclopentadienyl-haltigen Struktur darstellen, in denen eines bis alle H-Atome, durch gleiche oder verschiedene Reste aus der Gruppe von linearem oder verzweigtem $C_1$-$C_{20}$-Alkyl, das 1-fach bis vollständig durch Halogen, 1-3fach durch Phenyl sowie 1-3fach durch Vinyl substituiert sein kann, $C_6$-$C_{12}$-Aryl, Halogenaryl mit 6 bis 12 C-Atomen sowie 1- oder 2-fach durch D und A substituiert sein können,

D ein Donoratom bedeutet, das zusatzlich Substituenten tragen kann und das in seinem jeweiligen Bindungszustand mindestens über ein freies Elektronenpaar verfügt,

A ein Akzeptoratom bedeutet, das zusätzlich Substituenten tragen kann und das in seinem jeweiligen Bindungszustand eine Elektronenpaar-Lücke aufweist,

wobei D und A durch eine reversible koordinative Bindung derart verknüpft sind, daß die Donorgruppe eine positive (Teil)Ladung und die Akzeptorgruppe eine negative (Teil)Ladung annehmen,

M für ein Übergangsmetall der III., IV., V. oder VI. Nebengruppe des Periodensystems der Elemente (Mendelejew) einschließlich der Lanthaniden und Actiniden steht,
X ein Anionäquivalent bedeutet und
n in Abhängigkeit von der Ladung von M die Zahl Null, Eins, Zwei, Drei oder Vier bedeutet,

**dadurch gekennzeichnet, daß** man
je eine Verbindung der Formeln (II) und (III)

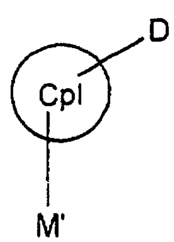

(II),

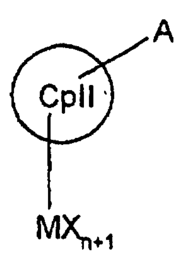

(III).

oder je eine Verbindung der Formeln (IV) und (V)

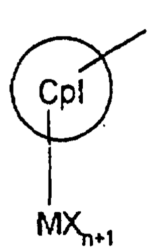 (IV), 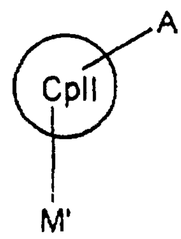 (V)

oder je eine Verbindung der Formeln (VI) und (VII)

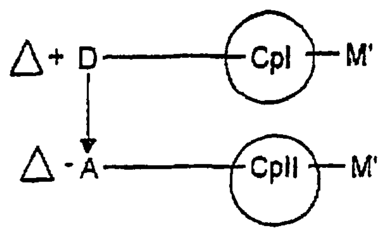 (VI) , $MX_{n+2}$ (VII)

unter Austritt von M'X in Gegenwart eines aprotischen Lösungsmittels oder je eine Verbindung der Formeln (VIII) und (III)

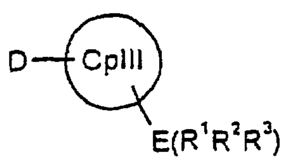 (VIII), 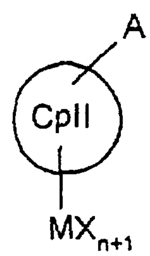 (III)

oder je eine Verbindung der Formeln (IV) und (IX)

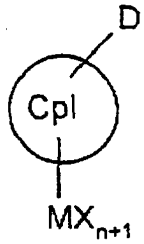 (IV), 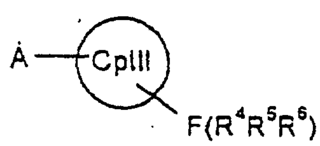 (IX)

oder je eine Verbindung der Formeln (X) und (VII)

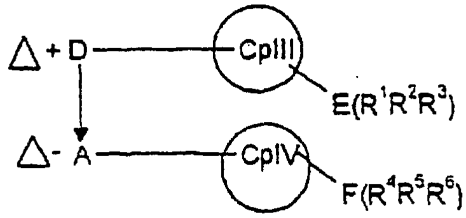

(X), $MX_{n+2}$ (VII)

unter Austritt von $E(R^1R^2R^3)X$ und $F(R^4R^5R^6)X$ in Abwesenheit oder in Gegenwart eines aprotischen Lösungsmittels miteinander umsetzt, wobei

CpIII und CpIV zwei gleiche oder verschiedene ungeladene Molekülteile mit einer Cyclopentadien-haltigen Struktur darstellen, ansonsten aber CpI und CpII gleichen,

M' ein Kationäquivalent eines (Erd)Alkalimetalls oder Tl bedeutet,

E und F unabhängig voneinander eines der Elemente Si, Ge oder Sn bedeuten und

$R^1$, $R^2$, $R^3$, $R^4$, $R^5$ und $R^6$ unabhängig voneinander fur geradkettiges oder verzweigtes $C_1$-$C_{20}$-Alkyl, $C_6$-$C_{12}$-Aryl sowie $C_1$-$C_6$-Alkyl-$C_6$-$C_{12}$-Aryl und $C_6$-$C_{12}$-Aryl-$C_1$-$C_6$-Alkyl, Vinyl, Allyl oder Halogen stehen,

wobei weiterhin in den Formeln (VIII), (IX) und (X) an Stelle von $E(R^1R^2R^3)$ und $F(R^4R^5R^6)$ Wasserstoff stehen kann und in diesem Falle X auch für ein Amidanion vom Typ $R_2N^{\theta}$ oder ein Carbanion vom Typ $R_3C^{\theta}$ oder ein Alkoholatanion vom Typ $RO^{\theta}$ stehen kann. und wobei es weiterhin möglich ist, Verbindungen der Formeln (II) oder (VIII) in Gegenwart von Verbindungen der Formeln (V) oder (IX) direkt mit einer Übergangsmetall-Verbindung der Formel (VII) umzusetzen.

3. Verwendung von Metallocen-Verbindungen nach Anspruch 1 in einem Verfahren zur Homo- oder Copolymerisation eines oder mehrerer Olefine, Alkine oder Diolefine als Monomere oder zur ringöffnenden Polyaddition in der Gas-, Lösungs-, Masse-, Hochdruck- oder Slurry-Phase bei -60 bis +250°C und 0,5 bis 5.000 bar und in Gegenwart oder Abwesenheit von gesättigten oder aromatischen Kohlenwasserstoffen oder von gesättigten oder aromatischen Halogenkohlenwasserstoffen, wobei diese Metallocen-Verbindungen als Katalysatoren in einer Menge von $10^1$ bis $10^{12}$ mol Monomere pro mol Metallocen eingesetzt werden.

4. Metallocen-Verbindungen nach Anspruch 1, **dadurch gekennzeichnet, daß** die Carbanionen CpI und CpII ein Cyclopentadienylgerüst aus der Gruppe von Cyclopentadien, substituiertem Cyclopentadien, Inden, substituiertem Inden, Fluoren und substituiertem Fluoren bedeuten, in welchen je Cyclopentadien- bzw. ankondensiertem Benzolring 1 bis 4 Substituenten aus der Gruppe von $C_1$-$C_{20}$-Alkyl, $C_1$-$C_{20}$-Alkoxy, Halogen, $C_6$-$C_{12}$-Aryl, Halogenphenyl, D und A vorliegen, wobei D und A den in Anspruch 1 genannten Bedeutungsumfang haben und wobei ankondensierte aromatische Ringe teilweise oder vollständig hydriert sein können.

5. Metallocen-Verbindungen nach Anspruch 1, **dadurch gekennzeichnet, daß** als Donoratome D Elemente aus der Gruppe N, P, As, Sb, Bi, O, S, Se, Te, F, Cl, Br, I, bevorzugt N, P, O, S, eingesetzt werden.

6. Metallocen-Verbindungen nach Anspruch 1, **dadurch gekennzeichnet, daß** als Akzeptoratome A Elemente aus der Gruppe B, Al, Ga, In, Tl, bevorzugt B, Al, Ga eingesetzt werden.

7. Metallocen-Verbindungen nach Anspruch 1, **dadurch gekennzeichnet, daß** als Donor-Akzeptor-Brücken aus der Gruppe von

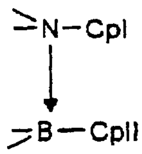 ; 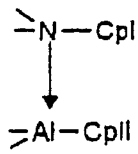 ; 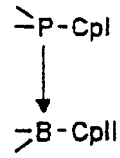 ; 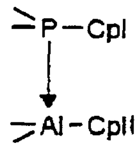 ; 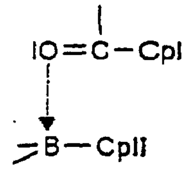 ;

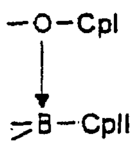 ; 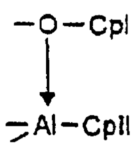 ; 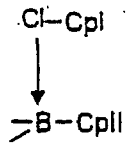 ; 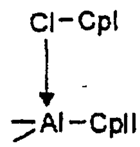 ; 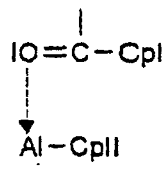

eingesetzt werden.

8. Metallocen-Verbindungen nach Anspruch 1, **dadurch gekennzeichnet, daß** M für Sc, Y, La, Sm, Nd, Lu, Ti, Zr, Hf, Th, V, Nb, Ta oder Cr, bevorzugt für Ti, Zr, Hf, V, Nb oder Ta steht.

9. Metallocen-Verbindungen nach Anspruch 1, **dadurch gekennzeichnet, daß** sie gemeinsarn mit einem Aluminoxan oder einen Boran oder einen Borat als Katalysatorsystem eingesetzt werden.

10. Reaktionsprodukte ionisierender Agentien mit Metallocen-Verbindungen der Formel (I) der Formel (XI)

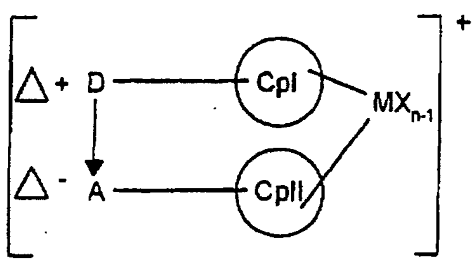 Anion$^-$ (XIa)

bzw.

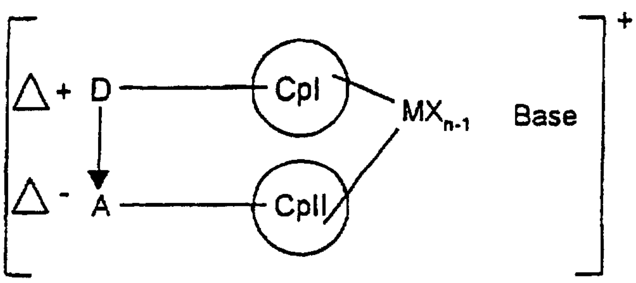 Anion$^-$ (XIb)

(XI),

in der
Anion für das gesamte sperrige, schlecht koordinierende Anion und Base für eine Lewis-Base stehen.

11. Umlagerungsprodukte von Metallocen-Verbindungen nach Anspruch 1 unter Selbstaktivierung, bei denen nach Öffnung der D/A-Bindung das Akzeptoratom A einen X-Liganden unter Ausbildung einer zwitterionischen Metallocen-Komplex-Struktur bindet, wobei beim Übergangsmetall M eine positive Ladung und beim Akzeptoratom A eine negative Ladung erzeugt wird und wobei ein weiterer X-Ligand H oder substituiertes oder nicht substituiertes

C darstellt, in dessen Bindung zum Übergangsmetall M die Olefin-Insertion zur Polymerisation erfolgt, wobei bevorzugt 2 X-Liganden zu einem Chelat-Liganden verknüpft sind.

## Claims

**1.** Metallocene compounds of the formula

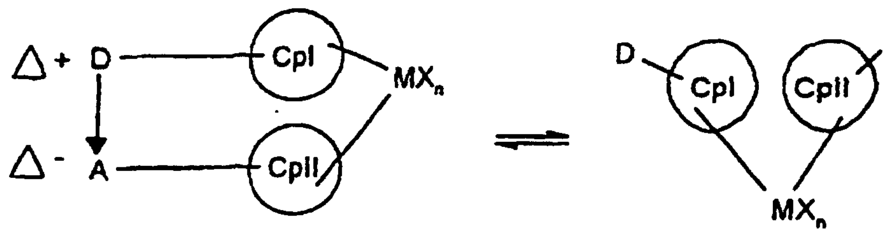

(Ia) (Ib) (I),

in which

CpI and CpII represent two identical or different carbanions having a cyclopentadienyl-containing structure, in which one to all of the H atoms may be substituted by identical or different radicals from the group linear or branched $C_1$-$C_{20}$-alkyl, which may be monosubstituted to completely substituted by halogen, mono- to tri-substituted by phenyl and mono- to tri-substituted by vinyl, $C_6$-$C_{12}$-aryl, haloaryl having from 6 to 12 carbon atoms, organometallic substituents, such as silyl, trimethylsilyl, ferrocenyl, and mono- or di-substituted by D and A,

D represents a donor atom which may additionally carry substituents and which in its particular bond state has at least one lone electron pair,

A represents an acceptor atom which may additionally carry substituents and which in its particular bond state has an electron pair gap,

wherein D and A are so linked by a reversible co-ordinate bond that the donor group acquires a positive (partial) charge and the acceptor group acquires a negative (partial) charge,

M represents a transition metal of sub-group III, IV, V or VI of the periodic system of the elements (Mendeleyev), including the lanthanides and actinides,

X represents an anion equivalent, and

n represents the number zero, one, two, three or four, depending on the charge of M.

**2.** Process for the preparation of metallocene compounds of the formula

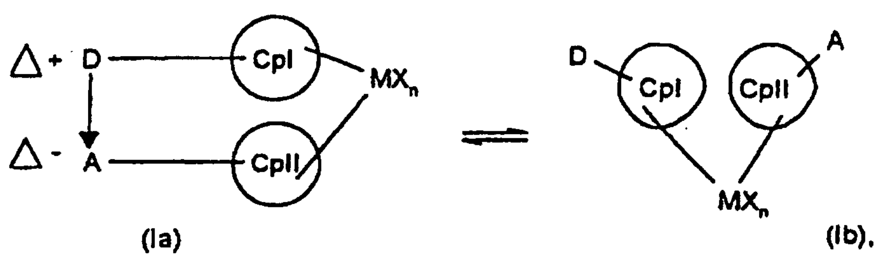

(Ia) (Ib),

in which

CpI and CpII represent two identical or different carbanions having a cyclopentadienyl-containing structure, in which one to all of the H atoms may be substituted by identical or different radicals from the group linear or branched $C_1$-$C_{20}$-alkyl, which may be monosubstituted to completely substituted by halogen, mono- to tri-substituted by phenyl and mono- to tri-substituted by vinyl, $C_6$-$C_{12}$-aryl, haloaryl having from 6 to 12 carbon atoms, and mono- or di-substituted by D and A,

D represents a donor atom which may additionally carry substituents and which in its particular bond state has at least one lone electron pair,

A represents an acceptor atom which may additionally carry substituents and which in its particular bond state has an electron pair gap,

wherein D and A are so linked by a reversible co-ordinate bond that the donor group acquires a positive (partial) charge and the acceptor group acquires a negative (partial) charge,

M represents a transition metal of sub-group III, IV, V or VI of the periodic system of the elements (Mendeleyev), including the lanthanides and actinides,
X represents an anion equivalent, and
n represents the number zero, one, two, three or four, depending on the charge of M,

which process is **characterised in that** there are reacted with one another
a compound of each of formulae (II) and (III)

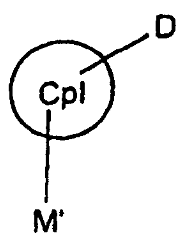 (II), 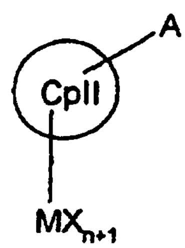 (III)

or a compound of each of formulae (IV) and (V)

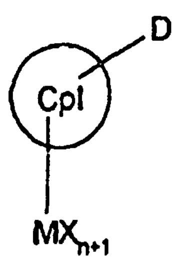 (IV), 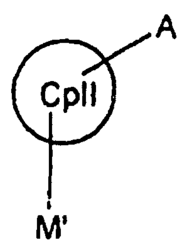 (V)

or a compound of each of formulae (VI) and (VII)

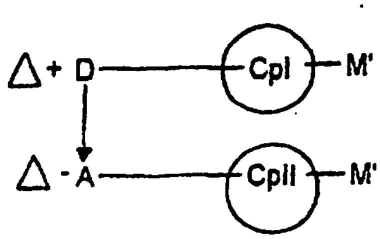 (VI) , $MX_{n+2}$ (VII)

with removal of M'X in the presence of an aprotic solvent, or a compound of each of formulae (VIII) and (III)

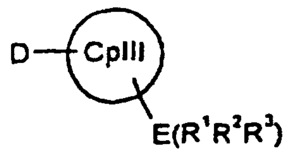 (VIII), 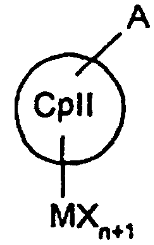 (III)

or a compound of each of formulae (IV) and (IX)

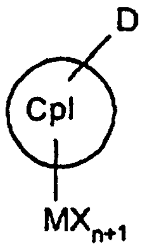 (IV), 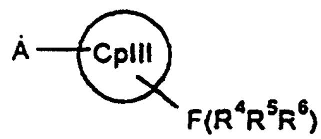 (IX)

or a compound of each of formulae (X) and (VII)

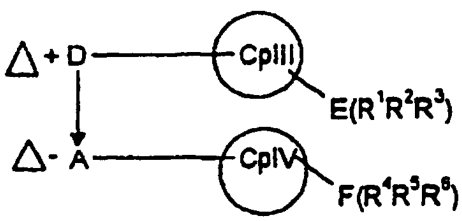 (X), $MX_{n+2}$ (VII)

with removal of $E(R^1R^2R^3)X$ and $F(R^4R^5R^6)X$ in the absence or in the presence of an aprotic solvent, wherein CpIII and CpIV represent two identical or different uncharged molecular parts having a cyclopentadienyl-containing structure, but otherwise are the same as CpI and CpII,

M' represents a cation equivalent of an alkali/alkaline earth metal or Tl,

E and F each independently of the other represents one of the elements Si, Ge or Sn, and

$R^1$, $R^2$, $R^3$, $R^4$, $R^5$ and $R^6$ each independently of the others represents straight-chain or branched $C_1$-$C_{20}$-alkyl, $C_6$-$C_{12}$-aryl as well as $C_1$-$C_6$-alkyl-$C_6$-$C_{12}$-aryl and $C_6$-$C_{12}$-aryl-$C_1$-$C_6$-alkyl, vinyl, allyl or halogen,

wherein in formulae (VIII), (IX) and (X), hydrogen may take the place of $E(R^1R^2R^3)$ and $F(R^4R^5R^6)$ and **in that** case X may also represent an amide anion of the $R_2N^{\theta}$ type or a carbanion of the $R_3C^{\theta}$ type or an alcoholat anion of the $RO^{\theta}$ type, and wherein it is also possible to react compounds of formula (II) or (VIII) directly with a transition metal compound of formula (VII) in the presence of compounds of formula (V) or (IX).

**3.** Use of metallocene compounds according to claim 1 in a process for the homo- or co-polymerisation of one or more olefins, alkynes or diolefins as monomers or for the ring-opening polyaddition in the gas, solution, mass, high-pressure or slurry phase at from -60 to +250°C and from 0.5 to 5000 bar and in the presence or absence of saturated or aromatic hydrocarbons or of saturated or aromatic halogenated hydrocarbons, wherein the metallocene compounds are used as catalysts in an amount of from $10^1$ to $10^{12}$ mol. of monomers per mol. of metallocene.

**4.** Metallocene compounds according to claim 1, **characterised in that** the carbanions CpI and CpII represent a cyclopentadienyl structure from the group cyclopentadiene, substituted cyclopentadiene, indene, substituted indene, fluorene and substituted fluroene, in which there are present per cyclopentadiene ring or fused benzene ring from 1 to 4 substituents from the group $C_1$-$C_{20}$-alkyl, $C_1$-$C_{20}$-alkoxy, halogen, $C_6$-$C_{12}$-aryl, halophenyl, D and A, wherein D and A have the range of meanings mentioned in claim 1 and fused aromatic rings may be partially or completely hydrogenated.

**5.** Metallocene compounds according to claim 1, **characterised in that** there are used as donor atoms D elements from the group N, P, As, Sb, Bi, O, S, Se, Te, F, Cl, Br, I, preferably N, P, O, S.

**6.** Metallocene compounds according to claim 1, **characterised in that** there are used as acceptor atoms A elements from the group B, Al, Ga, In, Tl, preferably B, Al, Ga.

**7.** Metallocene compounds according to claim 1, **characterised in that** there are used donor-acceptor bridges from the group

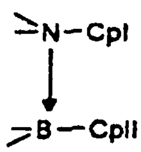 ; 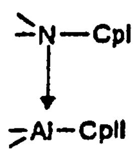 ; 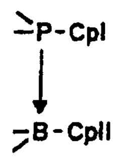 ; 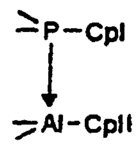 ; 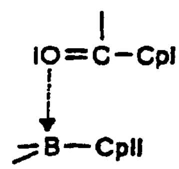 ;

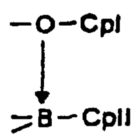 ; 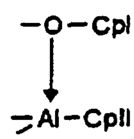 ; 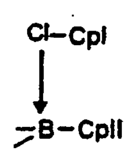 ; 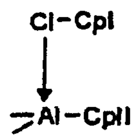 ; 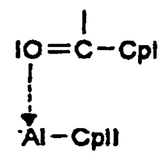 .

**8.** Metallocene compounds according to claim 1, **characterised in that** M represents Sc, Y, La, Sm, Nd, Lu, Ti, Zr, Hf, Th, V, Nb, Ta or Cr, preferably Ti, Zr, Hf, V, Nb or Ta.

**9.** Metallocene compounds according to claim 1, **characterised in that** they are used together with an aluminoxane or a borane or a borate as a catalyst system.

**10.** Reaction products of ionising agents with metallocene compounds of formula (I) of formula (XI)

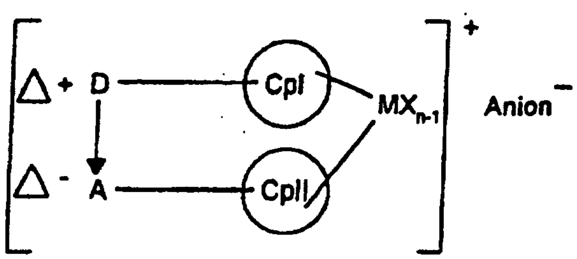

(XIa)

or

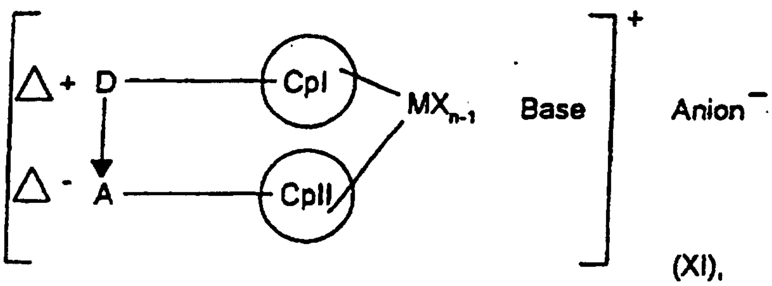

(XIb)

(XI),

in which
Anion represents the entire bulky, poorly co-ordinating anion and Base represents a Lewis base.

**11.** Rearrangement products of metallocene compounds according to claim 1 with self-activation, in which, after opening of the D/A bond, the acceptor atom A binds an X-ligand with formation of a zwitterionic metallocene complex structure, wherein a positive charge is produced in the transition metal M and a negative charge is produced in the acceptor atom A and wherein a further X-ligand represents H or substituted or unsubstituted C, in whose bond to the transition metal M the olefin insertion for polymerisation takes place, wherein preferably 2 X-ligands are linked to a chelate ligand.

**Revendications**

**1.** Dérivés de métallocènes de formule

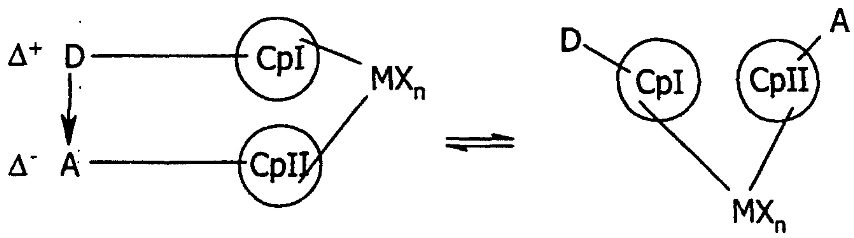

(Ia) (Ib) (I)

dans laquelle

CpI et CpII représentent deux carbanions identiques ou différents contenant un groupe cyclopentadiénylique dans leur structure et dans lesquels les atomes d'hydrogène peuvent être remplacés en totalité ou en partie par des radicaux identiques ou différents choisis parmi les radicaux alkyle à chaîne droite ou ramifiée en $C_1$-$C_{20}$, qui peuvent eux-mêmes être halogénés en totalité ou en partie et/ou porter 1 à 3 substituants phényle et/ou 1 à 3 substituants vinyle, des groupes aryle en $C_6$-$C_{12}$, des groupes halogénoaryle contenant 6 à 12 atomes de carbone, des substituants organométalliques tels que silyle, triméthylsilyle, ferrocényle, et/ou 1 ou 2 fois par D et A,

D représente un atome donateur qui peut porter des substituants et qui, dans son état particulier de liaison, dispose d'au moins une paire d'électrons libres,

A représente un atome accepteur qui peut porter des substituants et qui, dans son état particulier de liaison, a une paire d'électrons manquante,

D et A étant reliés par une liaison de coordination réversible de sorte que le groupe donateur prend une charge (partielle) positive et le groupe accepteur une charge (partielle) négative,

M représente un métal de transition du sous-groupe III, IV, V ou VI de la Classification Périodique des éléments (Mendeleïev) y compris les lanthanides et les actinides,

X représente un équivalent d'un anion et
n selon la charge de M, est égal à 0, 1, 2, 3 ou 4.

**2.** Procédé pour la préparation des dérivés de métallocènes de formule

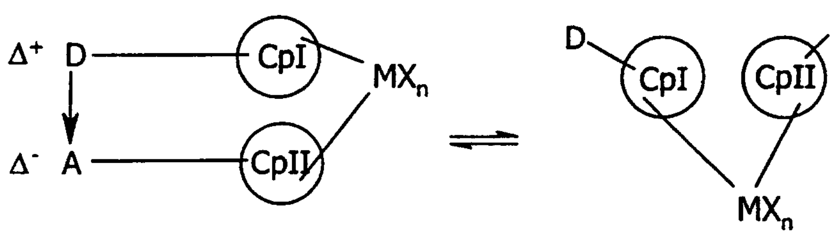

(Ia) (Ib)

dans laquelle

CpI et CpII représentent deux carbanions identiques ou différents contenant un groupe cyclopentadiényle dans leur structure, dans lesquels les atomes d'hydrogène peuvent être remplacés en totalité ou en partie par des groupes identiques ou différents choisis parmi les groupes alkyle à chaîne droite ou ramifiée en $C_1$-$C_{20}$ eux-mêmes halogénés en totalité ou en partie et/ou pouvant porter 1 à 3 substituants phényle et/ou 1 à 3 substituants vinyle, des groupes aryle en $C_6$-$C_{12}$, halogénoaryle en $C_6$-$C_{12}$, et 1 à 2 fois par D et A,
D représente un atome donateur qui peut porter des substituants et qui, dans son état particulier de liaison, dispose d'au moins une paire d'électrons libres,
A représente un atome accepteur qui peut porter des substituants et qui, dans son état particulier de liaison, a une paire d'électrons manquante,

D et A étant reliés par une liaison de coordination réversible de sorte que le groupe donateur prend une charge (partielle) positive et le groupe accepteur une charge (partielle) négative,

M représente un métal de transition du sous-groupe III, IV, V ou VI de la Classification Périodique des éléments (Mendeleïev) y compris les lanthanides et les actinides,
X représente un équivalent d'un anion et
n selon la charge de M, est égal à 0, 1, 2, 3 ou 4,

**caractérisé en ce que**
on fait réagir entre eux
un composé de formule (II) et un composé de formule (III)

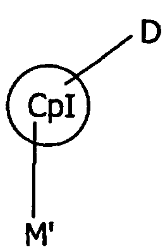

(II),

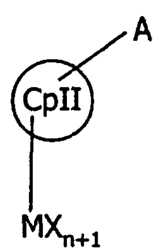

(III)

ou bien un composé de formule (IV) et un composé de formule (V)

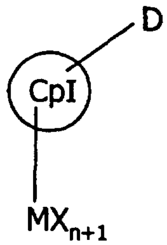 (IV), 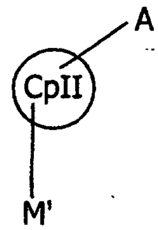 (V)

ou bien un composé de formule (VI) et un composé de formule (VII)

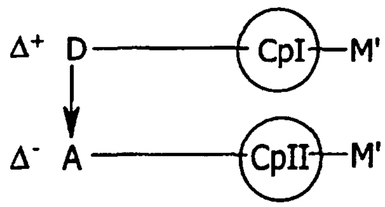 (VI), $MX_{n+2}$ (VII)

avec élimination de M'X, en présence d'un solvant aprotonique, ou bien un composé de formule (VIII) et un composé de formule (III)

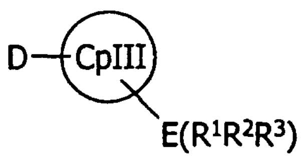 (VIII), 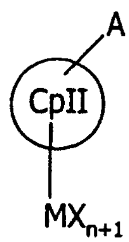 (III)

ou bien un composé de formule (IV) et un composé de formule (IX)

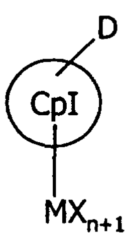 (IV), 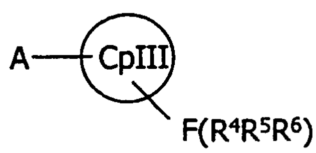 (IX)

ou bien un composé de formule (X) et un composé de formule (VII)

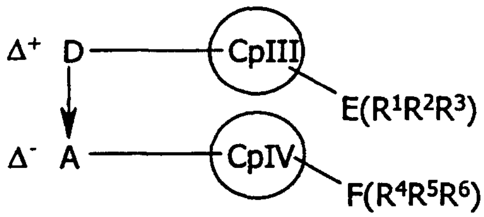 (X), $MX_{n+2}$ (VII)

avec élimination de $E(R^1R^2R^3)X$ et $F(R^4R^5R^6)X$, en présence ou en l'absence d'un solvant aprotonique,

CpIII et CpIV représentant deux parties de molécules identiques ou différentes, non chargées, à structure cyclopentadiénique, ou sont identiques à CpI et CpII,
M' représente un équivalent d'un cation de métal alcalin, alcalino-terreux ou de Tl,
E et F représentent chacun, indépendamment l'un de l'autre, l'un des éléments Si, Ge ou Sn et
$R^1$, $R^2$, $R^3$, $R^4$, $R^5$ et $R^6$ représentent chacun, indépendamment les uns des autres, un groupe alkyle à chaîne droite ou ramifiée en $C_1$-$C_{20}$, aryle en $C_6$-$C_{12}$, (alkyle en $C_1$-$C_6$) aryle en $C_6$-$C_{12}$ ou (aryle en $C_6$-$C_{12}$) alkyle en $C_1$-$C_6$, vinyle, allyle ou un halogène,

étant précisé que dans les formules (VIII), (IX) et (X), à la place de $E(R^1R^2R^3)$ et de $F(R^4R^5R^6)$, il peut y avoir de l'hydrogène, et dans ce cas, X peut également représenter un anion amidique du 'type $R_2N^{\ominus}$ ou un carbanion du type $R_3C^{\ominus}$ ou un anion d'alcoolate du type $RO^{\ominus}$, et qu'on peut en outre faire réagir les composés de formule (II) ou (VIII), en présence de composés de formule (V) ou (IX), directement avec un dérivé de métal de transition de formule (VII).

3. Utilisation des dérivés de métallocènes selon la revendication 1, dans un procédé pour l'homo- ou la co-polymérisation d'une ou plusieurs oléfines, alcynes ou dioléfines monomères ou pour la polyaddition avec ouverture du cycle en phase gazeuse, en solution, en masse, sous haute pression ou en dispersion à des températures de -60°C à +250°C et des pressions de 0,5 à 5 000 bars et en présence ou en l'absence d'hydrocarbures saturés ou aromatiques ou d'hydrocarbures halogénés saturés ou aromatiques, ces dérivés de métallocènes étant mis en oeuvre en tant que catalyseurs en quantité d'une mole de métallocène pour $10^1$ à $10^{12}$ mol des monomères.

4. Dérivés de métallocènes selon la revendication 1, **caractérisés en ce que** les carbanions CpI et CpII ont un squelette cyclopetandiénylique du groupe du cyclopentadiène, du cyclopentadiène substitué, de l'indène, de l'indène substitué, du fluorène et du fluorène substitué, dans lequel chaque noyau cyclopentadiène et noyau benzénique condensé porte 1 à 4 substituants choisis parmi les groupes alkyle en $C_1$-$C_{20}$, alcoxy en $C_1$-$C_{20}$, les halogènes, les groupes aryle en $C_6$-$C_{12}$, halogénophényle, D et A, D et A ayant les significations indiquées dans la revendication 1, les noyaux aromatiques condensés pouvant être hydrogénés en totalité ou en partie.

5. Dérivés de métallocènes selon la revendication 1, **caractérisés en ce que** l'on utilise en tant qu'atomes donateurs D des éléments du groupe consistant en N, P, As, Sb, Bi, O, S, Se, Te, F, Cl, Br, I, de préférence du groupe N, P, O, S.

6. Dérivés de métallocènes selon la revendication 1, **caractérisés en ce que** l'on utilise en tant qu'atomes accepteurs A des éléments du groupe B, Al, Ga, In, Tl, de préférence du groupe B, Al, Ga.

7. Dérivés de métallocènes selon la revendication 1, **caractérisés en ce que** les ponts donateur-accepteur sont choisis dans le groupe suivant

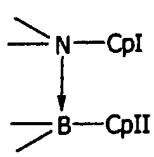 ; 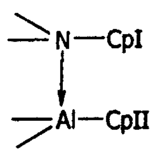 ; 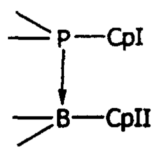 ; 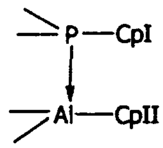 ; 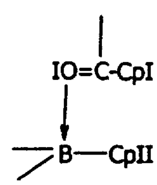 ;

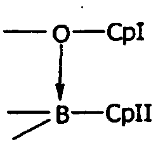 ; 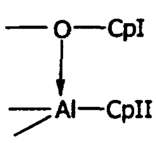 ; 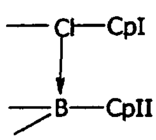 ; 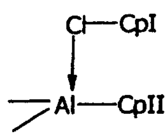 ; 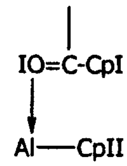

8. Dérivés de métallocènes selon la revendication 1, **caractérisés en ce que** M représente Sc, Y, La, Sm, Nd, Lu, Ti, Zr, Hf, Th, V, Nb, Ta ou Cr, de préférence Ti, Zr, Hf, V, Nb ou Ta.

9. Dérivés de métallocènes selon la revendication 1, **caractérisés en ce qu'**on les met en oeuvre sous la forme d'un système catalyseur avec un aluminoxane ou un borate.

10. Produits de réaction, de formule (XI), d'agents ionisants et de dérivés de métallocènes de formule (I)

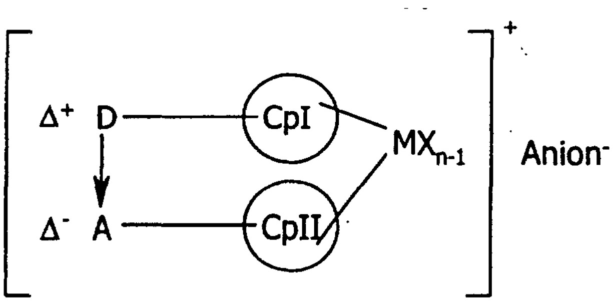

(XIa),

ou

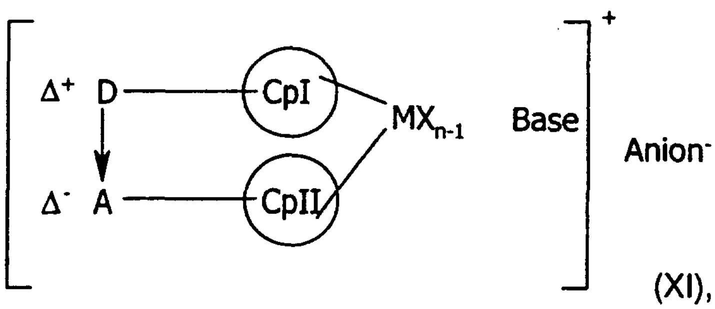

(XIb),

(XI),

dans laquelle Anion représente l'anion global volumineux, mal coordinant, et Base représente une base de Lewis.

11. Produits de transposition de dérivés de métallocènes selon la revendication 1, par auto-activation, dans lesquels, après ouverture de la liaison D/A, l'atome accepteur A fixe un ligand X avec formation d'une structure hermaphrodite de complexe de métallocène, avec production d'une charge positive du métal de transition M et d'une charge négative de l'atome accepteur A, et un autre ligand X consiste en H ou en C substitué ou non, dont la liaison avec le métal de transition M constitue le point d'insertion des oléfines pour polymérisation, deux ligands X étant de préférence reliés entre eux sous forme d'un ligand chélate.